# EUROPEAN PATENT APPLICATION

(11) **EP 4 848 667 A2**
(43) Date of publication of application: **02.12.2026**
(21) Application number: 26165155.8
(22) Date of filing: 16.03.2026
(51) Int. Cl.: H04L 12/40

(54) **CONTROL IN A MULTIDROP COMMUNICATION NETWORK**

(30) Priority: 10.04.2025 DE 102025114125; 21.05.2025 DE 102025119704
(71) Applicant: Infineon Technologies AG, 85579 Neubiberg (DE)
(72) Inventor: KIRCHENBAUR, Markus, 83109 Großkarolinenfeld (DE); HARTLIEB, Heimo, 8055 Graz (AT); GAHAN, Dick, Co Wexford, Y25 YX50 (IE)
(74) Representative: Infineon Patent Department

(57) **Abstract**

A mechanism for controlling the transmission of a datagram out of a media access control module of an electronic device. A data transmission control module is configured to assert a hold signal outside of any transmit opportunity for the media access control module. The media access control module is configured to only transmit the datagram when the hold signal is deasserted. The hold signal is deasserted by the data transmission control module only during a transmit opportunity for the electronic device.

## Description

### TECHNICAL FIELD

The present disclosure relates to communication networks, and in particular, to multidrop communication networks.

### BACKGROUND

A number of communication networks comprise multiple electronic devices sharing a common communication medium to transmit data. In such networks, data collisions may occur when two or more devices attempt to transmit simultaneously, leading to data corruption and reduced network efficiency. To address this issue, collision avoidance techniques, particularly PHY-level Collision Avoidance techniques, have been developed.

Some existing collision avoidance methods employ a time-division approach to facilitate communication on a shared communication medium. In this approach, each device is assigned a specific time slot or position (known as a transmit opportunity) in a transmit order sequence during which it is permitted to communicate or initiate communications. This approach may include the use of a beacon signal to synchronize devices and coordinate communications, such that the beacon signal functions as a heartbeat for inter-device communication.

One known example of a suitable communication protocol that operates in this manner is the 10BASE-T1S protocol or standard, e.g., set out in the IEEE 802.3 cg standard. In such approaches, the shared communication medium may, for instance, be an ethernet cable.

There is an ongoing desire for improved and more flexible communication techniques for performing inter-device communication over a shared/common communication medium.

### SUMMARY

There is herein proposed a data transmission control module for an electronic device of a communication network, wherein the electronic device is configured to only transmit data to one or more other electronic devices of the communication network over a shared communication medium during any transmit opportunities for the electronic device.

The data transmission control module may be configured to, outside of every transmit opportunity for the electronic device, continually assert a hold signal to a media access control module of the electronic device to prevent the media access control module from transmitting a first datagram, for communication over the shared communication medium, out of the media access control module.

The data transmission control module may also be configured to, at least when there is a desire to transmit the first datagram, at each transmit opportunity for the electronic device, deassert the hold signal to the media access control module of the electronic device to permit the media access control module to transmit the first datagram, for communication over the shared communication medium, out of the media access control module.

There is also proposed a media access control module for an electronic device of a communication network, wherein the electronic device is configured to only transmit data to one or more other electronic devices of the communication network over a shared communication medium during any transmit opportunities for the electronic device.

The media access control module may be configured to, when operating in a collision avoidance mode: monitor a hold signal received from a data transmission control module; and responsive to a desire to transmit a first datagram: responsive to the hold signal being asserted, prevent the transmission of the first datagram, for communication over the shared communication medium, out of the media access control module; and responsive to the hold signal being deasserted, transmit the first datagram out of the media access control module.

Those skilled in the art will recognize additional features and advantages upon reading the following detailed description, and upon viewing the accompanying drawings.

### BRIEF DESCRIPTION OF THE DRAWINGS

The present disclosure is illustrated by way of example, and not by way of limitation, in the figures of the accompanying drawings in which like reference numerals refer to similar or identical elements. The elements of the drawings are not necessarily to scale relative to each other. The features of the various illustrated examples can be combined unless they exclude each other.
Fig. 1 illustrates a communication network with multiple electronic devices.
Fig. 2 shows layers of an OSI model for an electronic device.
Fig. 3 depicts a portion of an electronic device with proposed modules.
Fig. 4 illustrates a first timing diagram of signals between a data transmission control module and a MAC module.
Fig. 5 illustrates a second timing diagram of signals between a data transmission control module and a MAC module.
Fig. 6 illustrates a third timing diagram of signals between a data transmission control module and a MAC module.
Fig. 7 illustrates a fourth timing diagram of signals between a data transmission control module and a MAC module.
Fig. 8 is a flow diagram of communication in an ethernet communication network.
Fig. 9 depicts a portion of an electronic device with proposed modules.
Fig. 10 depicts a portion of an electronic device with proposed modules.
Fig. 11 depicts a fifth timing diagram of signals between a data transmission control module and a MAC module.
Fig. 12 depicts a sixth timing diagram of signals between a data transmission control module and a MAC module.
Fig. 13 depicts a seventh timing diagram of signals between a data transmission control module and a MAC module.

### DETAILED DESCRIPTION

The examples described herein provide a mechanism for controlling the transmission of a datagram out of a media access control module of an electronic device. A data transmission control module is configured to assert a hold signal outside of any transmit opportunity for the media access control module. The media access control module is configured to only transmit the datagram when the hold signal is deasserted. The hold signal is deasserted by the data transmission control module only during a transmit opportunity for the electronic device.

For the purposes of this specification, nomenclature, signals and functions that are defined in the IEEE 802.3 family of standards, particularly IEEE 802.3cg, will be employed in this specification within the meaning of said standard, unless indicated otherwise in this specification.

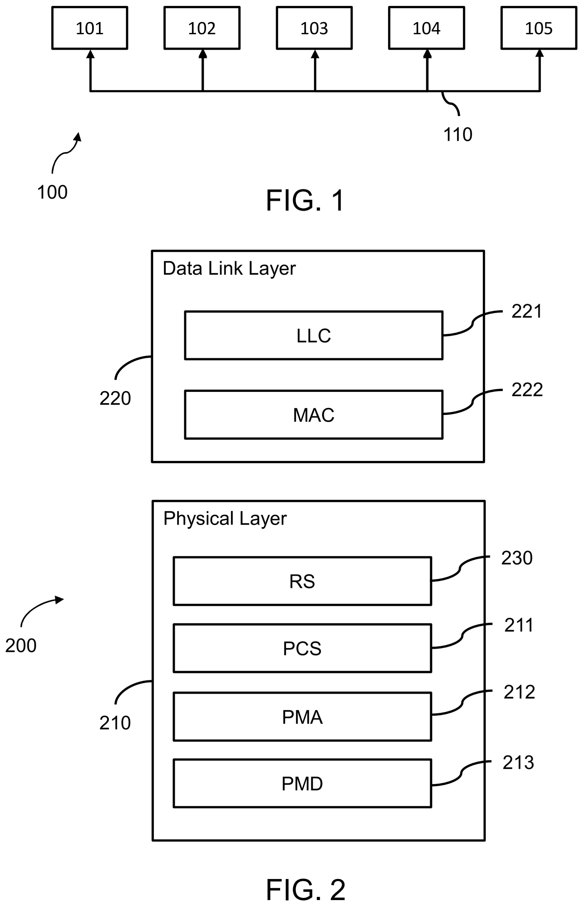

Fig. 1 illustrates a communication network 100 in which proposed embodiments may be employed, for the sake of improved contextual understanding.

The communication network 100 comprises a plurality of electronic devices 101, 102, 103, 104, 105 that are configured to communicate over a same, shared communication medium 110. In particular, the communication network 100 may be a multidrop network, with the shared communication medium 110 functioning as a multidrop bus.

The communication medium 110 may, for instance, comprise a single cable such as an ethernet cable. The shared communication medium effectively acts as a bus for facilitating external communication from each electronic device.

By way of working example, the communication network 100 may be a sensor network, in which at least some of the electronic devices comprise a sensor for monitoring an external parameter (e.g., temperature, user interaction, motion etc.). Values monitored by each sensor may be transmitted over the communication network, e.g., to a particular one of the electronic devices, for example a microcontroller.

There is a desire for each electronic device 101, 102, 103, 104, 105 of the communication network 100 to make use of a collision avoidance or other arbitration technique, to prevent or avoid different electronic devices attempting to communicate over the shared communication medium at a same time. This is because simultaneous attempts to transmit data from different devices can corrupt or introduce noise into the transmitted data. In other words, a half-duplex communication protocol or technique should be employed.

In some known or existing communication protocols, such as the one defined by the 10BASE-T1S protocol or standard (e.g., defined by the IEEE 802.3 cg standard(s)), each electronic device is effectively associated with a different device position. The device position defines a position within a transmit order sequence for the electronic device. When a beacon signal is sent over the communication medium, each electronic device will step through the transmit order sequence until it reaches its associated device position. The beacon signal thereby functions as a heartbeat for the communication protocol. The electronic device then has a transmit opportunity, during which it is permitted to begin or initiate the transmission of data. More particularly, the electronic device is configured to only transmit data to one or more other electronic devices of the communication network over the shared communication medium during the transmit opportunity for the electronic device. When the transmit opportunity has elapsed, the electronic device continues to move through the transmit order sequence as appropriate. The beacon signal will be retransmitted each time the transmit order sequence is complete. The beacon signal(s) may be transmitted or broadcast by a coordinating one 101 of the electronic devices 101, 102, 103, 104, 105 (which is sometimes known as a host device or a coordinating device).

In some known approaches, each electronic device may step through the transmit order sequence by, for each position in the sequence, waiting a predetermined period of time (which can be labelled a transmit opportunity duration), e.g., a certain number of clock cycles or frames, before moving to the next position in the transmit order sequence. If any electronic device wishes to transmit data, then it may transmit or broadcast a commit communication (which can be simply labelled a "commit") during its transmit opportunity to reserve the communication medium for transmission of (some) data. Typically, a commit will only be able to reserve the communication medium for a second predetermined period of time, at least to permit urgent communications from other electronic devices to be transmitted. Correspondingly, if a commit is received or detected by an electronic device, from another electronic device, then it will (further) delay the stepping through the transmit order sequence for the second predetermined period of time. Thus, transmission of data will be delayed if a commit signal is identified.

The above described approach is also, in the context of an Ethernet communication protocol defined by the IEEE 802.3cg-2019 standard, and is typically performed or coordinated by a reconciliation sublayer of the electronic device, e.g., embodied as a data transmission control module..

Fig. 2 illustrates a portion of an OSI model 200 for an electronic device, specifically, the physical layer 210 (also known as the first layer or Layer 1) and the data link layer 220 (also known as the second layer or Layer 2) of the OSI model. The physical layer 210 and the data link layer 220 may be connected over a media-independent interface MII, e.g., a reduced media-independent interface.

The physical layer 210 connects to a (shared) communication medium, such as an ethernet cable. The physical layer 210 comprises (at least) three sublayers, namely: the physical coding sublayer (PCS) 211, the physical medium attachment (PMA) sublayer 212 and the physical medium dependent (PMD) sublayer 213.

The physical layer 210 may be embodied in digital and/or analog circuitry, according to known principles. The function of the physical layer is to encode and transmit data from the data link layer over the communication medium and receive and decode data from the communication medium for provision to the data link layer. More specifically, the PCS 211 encodes data for transmission and decode received data. The PMA 212 provides the functions of serialization and deserialization, as well as clock recovery. The PMD 213 functions as a transceiver for the communication medium.

The data link layer 220 provides the functional mechanism for transferring data between nodes in a network and may handle error detection and correction. The data link layer 220 typically includes two sublayers: the Logical Link Control (LLC) sublayer 221 and the Media Access Control (MAC) sublayer 222. The LLC sublayer manages error checking and frame synchronization, while the MAC sublayer controls how the electronic device gains access to datagrams and permission to transmit datagrams.

The functionality of each sublayer may be performed by a respective module. Thus, for instance, the functionality of the MAC sublayer 222 may be performed by a media access control module (MAC module).

There is also a concept of a reconciliation sublayer (RS) 230. Conceptually, the reconciliation sublayers sits between the data link layer 220 and the physical layer 210, but may in practice be formed within a single one of these layers (e.g., within the physical layer 210 as illustrated).

The reconciliation layer 230 is configured to perform a data transmission control technique, or other arbitration technique, to co-ordinate and/or control a transmission of data from the data link layer 220 to the physical layer 210.

In particular, the reconciliation layer is configured to perform steps for identifying when the transmit opportunities for the electronic device occur. In some examples, the data transmission control module may monitor and track the timing of transmit opportunities based on the network's beacon signal and transmit order sequence, e.g., received over the physical layer 210. The module may maintain an internal counter or timer that synchronizes with the beacon signal to determine the start and end of each transmit opportunity for the electronic device.

The data transmission control module may also keep track of the device's position in the transmit order sequence. By knowing its position and monitoring the progression through the sequence, the module can anticipate when the next transmit opportunity for the electronic device will occur.

The functionality of the reconciliation layer 230 is performed by a data transmission control module of the electronic device.

In existing approaches, the functionality of a data transmission control module may be performed by a collision avoidance module, e.g., a PLCA module or a PLCA using the nomenclature of the IEEE 802.3cg standard.

Briefly, the aim of the PLCA (as defined in clause 148 of the IEEE 802.3cg standard) is to defer a data transmission from the MAC module over the communication medium. This is achieved using two complementary techniques that exploit existing protocols used by a known MAC module.

Firstly, it is noted that an existing MAC module is configured to, when transmitting data, back-off and reattempt transmission if a collision is reported to the MAC module, i.e., if a collision detect signal COL is asserted. The reattempted transmission is performed after at least predefined delay period (here: the length of a preset interpacket gap) has elapsed.

It is also noted that an existing MAC module will not attempt to transmit data when a carrier sense signal CRS is asserted, indicating that a communication medium is in use or is occupied. The carrier sense signal CRS indicates (from the perspective of the MAC) whether or not the communication medium is in use. When a carrier sense signal is deasserted (and there is data to be sent by the MAC module), the MAC module will wait until a predefined delay period (e.g., interpacket gap) has elapsed before transmitting data.

The existing PLCA controls the assertion and deassertion of the collision detect signal COL and the carrier sense signal CRS. In particular, the PLCA may control the assertion of each signal at least when the physical layer indicates these signals are to be asserted. The existing PLCA also controls the assertion of each signal to prevent data transmission over the communication medium outside of the transmit opportunities for the device by indicating virtual collisions and virtual communication medium usage to the MAC module.

The existing PLCA comprises a small variable delay line that is configured to buffer some of the data transmission from the MAC module. The PLCA is configured to prevent the buffered data from passing to the communication medium until a transmit opportunity for the electronic device has been reached.

If the variable delay line overflows (i.e., before the transmit opportunity has been reached), the PLCA will report a (virtual) collision to the MAC module and assert the carrier sense signal (e.g., even if the communication medium is not in use). The MAC module will respond by backing off and waiting to retransmit data. The PLCA maintains the assertion of the carrier sense signal until the next transmit opportunity has been reached, at which point the carrier sense signal is deasserted (in the scenario that the communication medium is not in use). Following its existing protocol, the MAC module will wait for the predefined delay period to elapse before attempting retransmittal of data.

More complete details of the functionality of an existing PLCA are found in the IEEE 802.3 family of standards, e.g., clause 148 of the IEEE 802.3cg-2019 standard.

The present disclosure proposes an alternative data transmission control module (DTCM) and corresponding media access control (MAC) module. In particular, the present disclosure provides an alternative mechanism for controlling the transfer or transmission of data out of the MAC module, e.g., to the physical layer. Put another way, the present disclosure provide an alternative data transmission control technique for controlling data flow from the data link layer 220 to the physical layer 210.

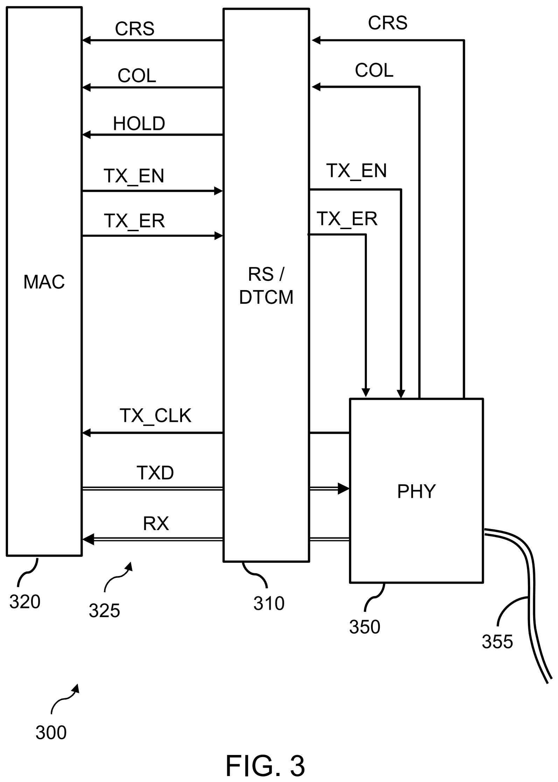

Fig. 3 illustrates a portion of a proposed electronic device, comprising a proposed data transmission control module (DTCM) 310 and a proposed media access control (MAC) module 320. For illustrative clarity, the electronic device further comprises physical layer circuitry 350 (PHY) which embodies the physical layer previously disclosed for communicating over a (shared) communication medium 355.

The data transmission control module (DTCM) 310 functions as a reconciliation sublayer (RS).

It will be appreciated that the electronic device is configured to only transmit data to one or more other electronic devices of the communication network over a shared communication medium 355 during any transmit opportunities for the electronic device. The monitoring of the timing of the transmit opportunities is performed by the data transmission control module (DTCM) 310, e.g., using a previously described approach.

For instance, the data transmission control module 310 may maintain an internal counter or timer that synchronizes with the beacon signal received via the physical layer circuitry 350 and the communication medium 355, allowing it to identify the start and end of each transmit opportunity for the electronic device. Additionally, the data transmission control module 310 is configured to keep track of the device's position in the transmit order sequence, enabling it to identify when the next transmit opportunity will occur.

The media access control module 320 has a media-independent interface (MII) or a variant thereof, such as a reduced media-independent interface (RMII). The nomenclature and signals associated with a media-independent interface MII are well established in the art, e.g., as set out in the IEEE 802.3 collection of standards, e.g., clause 22.2.2 of IEEE Std 802.3.

In particular, the signals associated with an MII may include transmit data (TXD), transmit enable (TX_EN), transmit clock (TX_CLK), receive data (RXD), receive data valid (RX_DV), receive clock (RX_CLK), carrier sense (CRS), collision detect (COL), transmit error (TX_ER), receive error (RX_ER) and so on. Some of these signals may be omitted or combined in some variants of an MII. For instance, in an RMII, collision detect (COL) and transmit error (TX_ER) are omitted, receive error becomes optional, CRS and RX_DV are multiplexed and TX_CLK and RX_CLK are combined.

The following signals may be collectively labeled receive signals RX: receive data (RXD), receive data valid (RX_DV), receive clock (RX_CLK) and, if present, receive error (RX_ER). The following description assumes that the media access control module 320 has a media-independent interface (MII). The skilled person would be readily capable of modifying the proposed embodiments for use with other variants of the MII.

It will be appreciated that, the value or symbol carried by the transmit data (TXD) is only changeable at a predetermined point in each cycle of the transmit clock (TX_CLK). This synchronization helps ensure reliable data transmission by providing a stable timing reference for data changes. In particular, each new data value on the TXD lines may be presented at the rising or falling edge of the TX_CLK signal.

All signals between the media access control module 320 and the physical layer circuitry 350 may be routed via the data transmission control module (DTCM) 310. This allows the data transmission control module 310 to connect to the physical layer circuitry via a standard or known media-independent interface MII for improved ease of connection.

The data transmission control module 310 is configured to control the transmission of data from the media access control module 320 to the physical layer circuitry 350. In particular, the data transmission control module 310 is configured to control when the media access control module 320 is permitted to transit a first datagram to the media access control module.

The proposed data transmission control module 310 is configured to define and control a hold signal HOLD that is provided to the media access control module 320, e.g., a hold signal HOLD that is carried by a hold line connected between the data transmission control module 310 and the media access control module 320. More particularly, the data transmission control module 310 is configured to control whether or not the hold signal HOLD is asserted or deasserted. The data transmission control module may assert the HOLD signal by setting it to a logical high or "1" state, and deassert the signal by setting it to a logical low or "0" state. Alternatively, the assertion and deassertion may use opposite logic levels.

The hold signal HOLD is carried over an additional communication path, i.e., a hold signal path, to that defined by a known media-independent interface MII. Thus, the media-independent interface MII (or variant thereof) of the media access control module is extended to include a connection for carrying the hold signal HOLD. This dedicated hold signal path provides a direct means of communication between the data transmission control module and the media access control module.

The data transmission control module 310 is configured to, at least when there is an indication from the media access control module that there is a first datagram to be transmitted, assert the hold signal outside of transmit opportunities for the electronic device. When the hold signal is asserted, it prevents the media access control module from transmitting datagrams (specifically, at least the first datagram) out of the media access control module for communication over the shared communication medium.

In other words, when the hold signal HOLD is asserted, it applies a backpressure to the media access control module, preventing it from transmitting datagrams out of the media access control module for communication over the shared communication medium. This backpressure may cause the media access control module to buffer any datagrams that are ready for transmission until the hold signal is deasserted.

At least when there is an indication from the media access control module that there is a first datagram to be transmitted (i.e., for transmittal), at each transmit opportunity for the electronic device, the data transmission control module 310 deasserts the hold signal. This deassertion permits the media access control module to transmit datagrams (e.g., the first datagram) out of the media access control module for communication over the shared communication medium.

Accordingly, the media access control module is configured to monitor the hold signal and prevent or pause transmission of datagrams when the hold signal is asserted. The media access control module may buffer datagrams (i.e., at least the first datagram) internally while waiting for the hold signal to be deasserted. When the hold signal is deasserted, the media access control module may then transmit the buffered first datagram (e.g., and any further buffered datagrams) out of the media access control module and to the physical layer circuitry for communication over the shared medium.

Although the above explanation presupposes a continuing hold signal that is continually disasserted during the transmission of a datagram, in an alternative embodiment the hold signal is briefly disasserted and then returns to its default hold value. In this alternative, the MAC is essentially triggered by the hold signal being disasserted and may transmits an ethernet frame on detection of the hold signal without the need for the hold signal to be continually deasserted.

More specifically, the media access control module may be operable in a first mode. When operating in such a mode, the media access control module is configured to, for transmitting a first datagram (e.g., responsive to a desire to transmit the first datagram), wait (if necessary) for the hold signal to be deasserted before outputting the first datagram from the media access control module, e.g., passing the first datagram to the physical layer circuitry.

In other words, the media access control module, when operating in the first mode, is configured to (for transmitting a first datagram or responsive to a desire to transmit the first datagram): responsive to the hold signal being asserted, prevent the transmission of the first datagram, for communication over the shared communication medium, out of the media access control module; and responsive to the hold signal being deasserted, immediately transmit the first datagram out of the media access control module.

In this context, the media access control module will immediately transmit the first datagram out of the media access control module when transmission of the first datagram is performed without waiting for a predefined delay (e.g., an interpacket gap) to elapse. Thus, the only delay in transmittal of the first datagram out of the media access control module is inherent physical delays or a delay to a next clocking period, e.g., rather than any intentional or programmed delay.

The media access control module may be configured to transmit datagrams (e.g., to the physical layer circuitry as later described) using one or more data transmit signals TXD, e.g., two or more data transmit signals TXD <1:0>, e.g., four or more data transmit signals TXD <3:0>. Each data transmit signal may be carried over a respective data transmit line, e.g., connected between the MAC module and the DTCM.

In this way, buffering or attempted buffering of any datagrams by the data transmission control module is not required, e.g., can be entirely avoided.

Thus, in preferred examples, the data transmission control module is configured to control the transmission of datagrams without directly buffering and/or attempting to buffer the datagrams for transmission. **In** other words, the data transmission control module may be configured to be absent a buffer or variable delay line for any datagrams from the media access control module.

In this way, the media access control module retains full control over datagram handling and buffering, while the data transmission control module focuses solely on managing transmit opportunities and preventing collisions.

The proposed approach facilitates more accurate identification of transmission times (i.e., timestamping) by the media access control (MAC) module. By allowing the MAC module to retain control over datagram handling, buffering and transmission timing, while using the hold signal from the data transmission control module to indicate when transmission is permitted, it is possible to precisely track of when datagrams are actually transmitted.

In some examples, the MAC module may be configured to record the time at which the first datagram is transmitted out of the media access control module. Since the MAC module directly controls the transmission of datagrams once the hold signal is deasserted, it is possible to capture more accurate timestamps without introducing additional latency or uncertainty that might occur if the data transmission control module were involved in buffering the data.

In some examples, the media access control module is configured to, when operating in the first mode provide an indication to the data transmission control module of the electronic device when there is a first datagram to be transmitted; and only transmitting the first datagram when the hold signal is deasserted responsive to the provided indication to the data transmission control module. **In** this way, the MAC module may be able to prevent or reduce a risk of the first datagram being unintentionally transmitted before the data transmission control module has had the opportunity to prevent its transmission via asserting the hold signal.

In some examples, there may be a predefined delay between when the media access control module provides the indication that there is a first datagram to be transmitted and when it begins an attempt to transmit the first datagram. This delay may provide an opportunity for the data transmission control module to change the state of the hold signal if necessary, e.g., to assert or deassert the hold signal.

The predefined delay may allow time for the data transmission control module to process the indication and adjust the hold signal accordingly. For example, if the hold signal is currently asserted when the indication is provided, the delay gives the data transmission control module a chance to deassert the hold signal before the media access control module attempts transmission. Similarly, if the hold signal is currently deasserted when the indication is provided, the delay gives the data transmission control module a chance to assert the hold signal module before the media access control module attempts transmission (e.g., if it is not the transmit opportunity for the electronic device).

Nonetheless, the predefined delay between providing the indication and attempting transmission is not essential. In some implementations, the media access control (MAC) module may respond dynamically to changes in the hold signal, even after initiating transmission of the first datagram (e.g., if transmission is initiated synchronously with providing the indication that there is data to be sent).

For example, if the hold signal is asserted during the transmission of a first symbol of the datagram, the MAC module may prevent further transmission of the remaining symbols. This approach may be effective if it can be expected that the hold signal will change before the first symbol is complete or before a transmit clock moves to a next cycle.

In such cases, the MAC module may be configured to monitor the hold signal continuously, even after beginning transmission. If the hold signal becomes asserted, the MAC module may immediately halt or pause the transmission process.

As previously mentioned, the MAC module may be designed to align its transmission attempts with the transmit clock cycles. In this scenario, the MAC module may check the state of the hold signal at the beginning of each transmit clock cycle. If the hold signal becomes asserted, the MAC module may prevent the transmission of the next symbol of the datagram, effectively stopping the datagram transmission at a clock cycle boundary.

The media access control (MAC) module may indicate that there is a first datagram to be sent by asserting a/the transmit enable signal (TX_EN). When the MAC module has a first datagram ready for transmission or wishes to begin transmission of the first datagram, it may assert the TX_EN signal, which is provided to the data transmission control module. **In** this way, the transmit enable signal serves as an indication to the data transmission control module as to whether or not the MAC module has data (i.e., the first datagram) ready for transmission. Thus, there may be provided a transmit enable line connected between the data transmission control module and the MAC module that carries the transmit enable signal TX_EN.

The data transmission control module may monitor the TX_EN signal (e.g., carried by the transmit enable line) to determine when the MAC module has data ready for transmission. This allows the data transmission control module to coordinate the deassertion of the hold signal with the MAC module's readiness to transmit data.

In some examples, the data transmission control module is configured to, outside of every transmit opportunity for the electronic device, continually assert the hold signal to the media access control module of the electronic device. **In** other words, the data transmission control module may be configured to continually assert the hold signal outside of every transmit opportunity even if there is no indication from the media access control module that there is a first datagram to be transmitted. It will be appreciated that this will still result in the hold signal being asserted outside of every transmit opportunity at least when there is an indication from the media access control module that there is a first datagram to be transmitted.

In other examples, the data transmission control module is configured to, outside of every transmit opportunity for the electronic device, only continually assert the hold signal to the media access control module of the electronic device when there is an indication from the media access control module that there is a first datagram to be transmitted (e.g., via an asserted transmit enable signal TX_EN).

Thus, the data transmission control module may be configured to monitor for the indication from the media access control module to determine whether or not there is a first datagram to be transmitted (e.g., by monitoring the transmit enable signal TX_EN). In this example, the data transmission control module is configured to, outside of every transmit opportunity for the electronic device, only (continually) assert the hold signal to the media access control module of the electronic device responsive to determining that there is a first datagram to be transmitted.

In some examples, the data transmission control module 310 may be configured to deassert the hold signal at each transmit opportunity for the electronic device. Thus, the data transmission control module 310 may deassert the hold signal at every transmit opportunity, regardless of whether there is a first datagram to be transmitted.

In other examples, the data transmission control module 310 may be configured to only deassert the hold signal at each transmit opportunity for the electronic device when there is an indication from the media access control module that there is a first datagram to be transmitted. This is possible when the data transmission control module is configured to, outside of every transmit opportunity for the electronic device, continually assert the hold signal to the media access control module of the electronic device.

Thus, the data transmission control module may be configured to monitor for the indication from the media access control module to determine whether or not there is a first datagram to be transmitted (e.g., by monitoring the transmit enable signal TX_EN). In this example, the data transmission control module is configured to, at each transmit opportunity for the electronic device, only deassert the hold signal to the media access control module of the electronic device responsive to determining that there is a first datagram to be transmitted.

A number of different scenarios representing possible different control schemes for the data transmission control module are hereafter described.

In a first scenario, the data transmission control module is configured to continually assert the hold signal HOLD outside of any transmit opportunities for the electronic device and deassert the hold signal HOLD at the beginning of each transmit opportunity for the electronic device. This ensures that the media access control module is prevented from transmitting data when it's not the device's turn to communicate, and simplifies the logic required in the data transmission control module.

It should be noted that the hold signal described above has a different functionality from the CRS and COL signals described above. In the case that the MAC puts a 4 bit nibble on the TXD line it physically drives each of the 4 lines of the TXD line to a specific bit value. In the case that the hold signal is asserted, then the MAC simply holds the nibble, i.e. keeps driving the lines with the same value, and does not go on to the next 4 bit nibble. In the case of an RMII signal which uses a two bit nibble, the same applies.

In contrast, a collision COL signal is not just used to hold transmission, it also keeps its standard meaning of indicating a collision on the ethernet link. Accordingly, on receipt of the COL signal the MAC needs to back off by the predetermined back off time. It does not hold the signal on the TXD line, it stops, waits a considerable time (e.g. 50 µs) and then tries to retransmit. In other words, the COL signal is not a simple hold signal, it is instead a signal that is acted on by the MAC.

Similarly, the carrier sense signal CRS indicates that the line is powered, i.e. that another node is transmitting. After the carrier sense signal CRS stops, an interframe gap (IFG) time is waited before the next node in turn transmits. Thus, again the CRS signal is not a simple hold signal, it has another meaning and causes the MAC to take specific action.

In contrast, the hold signal simply holds the value on the TXD line without requiring an interframe gap or collision time. By providing a designated signal to cause the MAC to hold, the additional time penalties caused by using COL or CRS can be avoided.

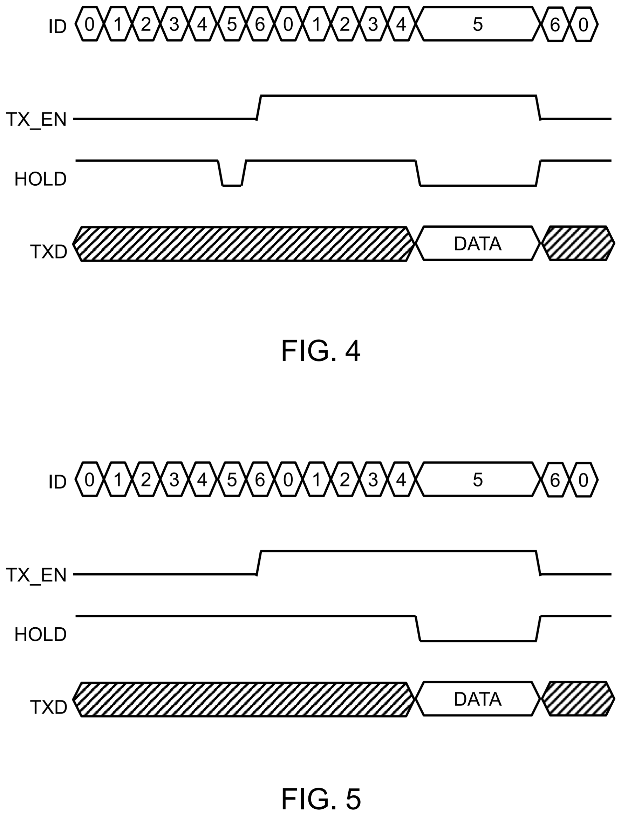

Fig. 4 is a timing diagram illustrating exemplary values for signals between the data transmission control module and the media access control module of the electronic device in the first scenario. The values of non-illustrated signals may follow their standard procedure for a media access control module (e.g., following clause 148 of the IEEE 802.3 cg standard).

A first waveform ID is a numeric sequence illustrating a sequence of transmit opportunities for a network in which the electronic device is able to communicate. For the purposes of illustration, in the present scenario, the electronic device is associated with transmit opportunity "5".

A second waveform TX_EN illustrates the transmit enable signal TX_EN produced by the media access control module. The transmit enable signal TX_EN is asserted when the media access control module has a datagram for transmission over the shared communication medium, and deasserted otherwise. Thus, the transmit enable signal TX_EN indicates whether or not there is a first datagram to be transmitted (or said first data datagram is being transmitted).

A third waveform HOLD illustrates the hold signal HOLD. The hold signal HOLD is asserted (here: held to a logical high) outside of the transmit opportunity for the electronic device, i.e., outside of transmit opportunity "5". The hold signal is deasserted at the beginning of each transmit opportunity. Thus, the triggering of deassertion of the hold signal HOLD at the start of each transmit opportunity may be independent of any indication (from the transmit enable signal TX_EN) of whether or not there is a first datagram to be transmitted.

For the illustrated example, the hold signal is deasserted for the entirety of the transmit opportunity. However, in some implementations, the hold signal may be reasserted before the end of the transmit opportunity, for example, after a predetermined time period or after the transmission of a datagram is complete.

A fourth waveform TXD illustrates the value of the data signal(s) TXD. The media access control module is configured to only and immediately transmit a datagram DATA when the hold signal is deasserted.

The waveforms illustrate the timing relationship between the hold signal HOLD and the actual transmission of data using the data signal(s) TXD. This ensures that data transmission only occurs during the designated transmit opportunity for the electronic device, as controlled by the data transmission control module.

When the hold signal is asserted (e.g., high), the media access control module is prevented from transmitting any data, even if it has data ready to send. This ensures that the device does not attempt to transmit outside of its assigned time slot.

As soon as the hold signal is deasserted (transitions to low), the media access control module is given permission to begin data transmission. At this point, if the module has a datagram ready to send, it immediately starts transmitting the DATA on the TXD lines.

The datagram DATA may, for instance, comprise a commit communication, followed by a payload communication (i.e., data content communication).

The commit communication serves as a reservation signal, indicating the electronic device's intention to transmit data over the shared communication medium, allowing the device to claim its transmit opportunity and prevent other devices from attempting to transmit simultaneously. The data content communication contains the actual information or payload that the electronic device wishes to transmit.

In this first scenario, if there is an indication from the MAC module of data to be sent after a transmit opportunity has started, the data transmission control module may still allow the transmission to proceed. This is because the hold signal is deasserted at the beginning of each transmit opportunity, regardless of whether there is data to be sent. The MAC module may then immediately begin transmitting the datagram as soon as it has data ready and the transmit enable signal is asserted, even if this occurs partway through the transmit opportunity.

Turning back to Fig. 3, in some examples, the data transmission control module 310 may deassert the hold signal at each transmit opportunity only when the media access control module indicates that there is data to be transmitted and assert the hold signal otherwise.

For example, the media access control module 320 may assert a transmit enable signal (TX_EN) provided to the data transmission control module 310 to indicate that it has data ready for transmission. In this case, the data transmission control module 310 may monitor the TX_EN signal and only deassert the hold signal during transmit opportunities where TX_EN is asserted.

Thus, in a second scenario, the data transmission control module is configured to continually assert the hold signal HOLD outside of any transmit opportunities for the electronic device and deassert the hold signal HOLD only at the beginning of each transmit opportunity for the electronic device when there is an indication from the media access control module (e.g., via the transmit enable signal TX_EN) that there is data for transmittal over the communication medium.

This selective deassertion approach may allow for more efficient use of the shared communication medium by only opening transmission windows (from the perspective of the MAC module) when there is actually data to be sent.

Fig. 5 is a timing diagram for this variant approach illustrating exemplary values for signals between the data transmission control module and the media access control module of the electronic device in the second scenario.

A first waveform ID is a numeric sequence illustrating a sequence of transmit opportunities for a network in which the electronic device is able to communicate. For the purposes of illustration, in the present scenario, the electronic device is associated with transmit opportunity "5".

A second waveform TX_EN illustrates the transmit enable signal TX_EN produced by the media access control module. The transmit enable signal TX_EN is asserted when the media access control module has a datagram for transmission over the shared communication medium, and deasserted otherwise.

A third waveform HOLD illustrates the hold signal HOLD. The hold signal HOLD is asserted (here: held to a logical high) outside of the transmit opportunity for the electronic device, i.e., outside of transmit opportunity "5". The hold signal is deasserted at the beginning of the transmit opportunity only when the transmit enable signal is asserted - i.e., when the media access control module has data ready for transmission. In other words, the hold signal is only deasserted when there is an indication from a media access control module of the electronic device that there is a first datagram to be transmitted.

A fourth waveform TXD illustrates the value of the data signal(s) TXD. The media access control module is configured to only and immediately transmit a datagram DATA when the hold signal is deasserted. Example content of the datagram DATA has been previously described.

In this second scenario, if the indication of data to be sent comes (e.g., the transmit enable signal TX_EN is asserted) after the transmit opportunity has started, then the data transmission control module may be configured to not deassert the hold signal until the next transmit opportunity. This effectively configures the hold signal to only be deasserted at the beginning of a transmit opportunity when there is already an indication of data to be sent. This may provide a more reliable transmission of data. Accordingly, the MAC module may need to wait until the next transmit opportunity to transmit its data.

Alternatively, in this second scenario, if the indication of data to be sent comes (e.g., the transmit enable signal TX_EN is asserted) after the transmit opportunity has started, the data transmission control module may be configured to deassert the hold signal immediately upon receiving the indication, even if it occurs partway through the transmit opportunity. This approach allows for more responsive data transmission, enabling the MAC module to begin transmitting as soon as data becomes available, without waiting for the next transmit opportunity.

Turning back to Fig. 3, in a third scenario, the data transmission control module 310 may only assert the hold signal when the media access control module indicates that there is data to be transmitted and outside the transmit opportunity for the device and deassert the hold signal otherwise. This selective assertion approach may allow for more efficient use of the hold signal, e.g., avoiding a need to maintain an assertion of the hold signal.

In this third scenario, the effective default state of the hold signal is deasserted. In particular, the data transmission control module may only assert the hold signal when the media access control module indicates that there is data to be transmitted (e.g., via assertion of the transmit enable signal TX_EN) and the electronic device is outside its designated transmit opportunity.

This default deasserted state functions to simplify the overall control logic and reduce power consumption, as the data transmission control module is only needed to intervene and assert the hold signal when necessary to prevent out-of-turn transmissions. This may help to reduce the complexity of timing and synchronization between the two modules.

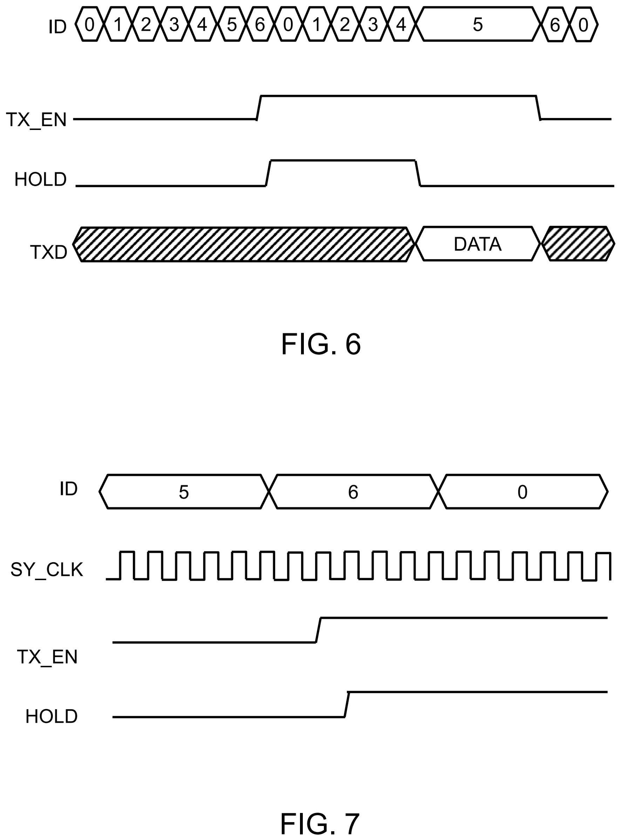

Fig. 6 is a timing diagram for this variant approach illustrating exemplary values for signals between the data transmission control module and the media access control module of the electronic device in the third scenario.

A first waveform ID is a numeric sequence illustrating a sequence of transmit opportunities for a network in which the electronic device is able to communicate. For the purposes of illustration, in the present scenario, the electronic device is associated with transmit opportunity "5".

A second waveform TX_EN illustrates the transmit enable signal TX_EN produced by the media access control module. The transmit enable signal TX_EN is asserted when the media access control module has a datagram for transmission over the shared communication medium, and deasserted otherwise. Otherwise, the transmit enable signal is deasserted.

A third waveform HOLD illustrates the hold signal HOLD. The hold signal HOLD is asserted (here: held to a logical high) outside of the transmit opportunity for the electronic device, i.e., outside of transmit opportunity "5", only when there is an indication from a media access control module of the electronic device that there is a first datagram to be transmitted.

After assertion (i.e., when there is an indication from a media access control module of the electronic device that there is a first datagram to be transmitted), the hold signal HOLD is deasserted at the beginning of the (immediately next) transmit opportunity for the electronic device. This allows the first datagram to be transmitted out of the media access control module.

A fourth waveform TXD illustrates the value of the data signal(s) TXD. The media access control module is configured to only and immediately transmit a datagram DATA when the hold signal is deasserted. Example content of the datagram DATA has been previously described.

Fig. 7 is a further timing diagram illustrating the first waveform ID, the second waveform TX_EN and the third waveform HOLD on a smaller timescale. For the purposes of illustration, a fifth waveform SY_CLK illustrates the system clock SY_CLK that clocks the operation of the media access control module and the data transmission control module.

In particular, Fig. 7 illustrates how the hold signal HOLD may be asserted at the next clocking cycle for the data transmission control module after receiving the indication that there is a first datagram to be sent by the media access control module.

In this third scenario, if the indication that there is a first datagram to be sent is received (e.g., the transmit enable signal TX_EN is asserted) after the transmit opportunity has started, then the data transmission control module may allow the transmission to proceed immediately by maintaining the deasserted state of the hold signal, as the default state of the hold signal is already deasserted during the transmit opportunity. This approach may enable more responsive data transmission, allowing the MAC module to begin transmitting as soon as data becomes available, even if it occurs partway through the transmit opportunity.

Alternatively, if the indication of data to be sent is received (e.g., the transmit enable signal TX_EN is asserted) after the transmit opportunity has started, then the data transmission control module may (immediately) assert the hold signal until the next transmit opportunity for the electronic device. This approach ensures that data transmission only occurs at the beginning of designated transmit opportunities, maintaining a more structured and predictable communication pattern on the shared medium.

Once again turning back to Fig. 3, it is noted that the data transmission control module 310 may control one or more additional signals provided to the media access control module, such as the Carrier Sense (CRS) and/or Collision Detect (COL) signals. These signals may be used to provide further information about the state of the shared communication medium to the media access control module. If used, the carrier sense signal may be carried by a carrier sense line connected between the data transmission control module 310 and the media access control module 320. Similarly, if used, the collision detect signal may be carried by a collision detect line connected between the data transmission control module 310 and the media access control module 320.

The physical layer circuitry may also (at least partially) control or define the values of the Carrier Sense (CRS) and the Collision Detect (COL) signal. The data transmission control module 310 may, in particular, be configured to coordinate with the physical layer circuitry in controlling the Carrier Sense (CRS) and Collision Detect (COL) signals to provide accurate and timely information about the state of the shared communication medium to the media access control module.

In particular, the data transmission control module may be configured to assert the carrier sense signal responsive to an indication that the shared communication medium is occupied (i.e., in use); and deassert the carrier sense signal responsive to an indication that the shared communication medium is unoccupied (i.e., not in use). It will be apparent that the media access control module may be correspondingly configured to, responsive to the carrier sense signal being asserted, prevent the transmission of data, for communication over the shared communication medium, out of the media access control module.

The data transmission control module may control the assertion of the carrier sense and/or collision detect signals responsive to information received from the physical layer circuitry.

For example, if the physical layer circuitry detects activity on the shared medium, it may inform the data transmission control module, which can then assert the CRS signal to indicate the medium is busy. Similarly, if the physical layer detects a collision between transmissions from multiple devices, it can relay this information to the data transmission control module, which may then assert the CRS signal.

Thus, the physical layer circuitry may be configured to monitor an occupancy of the shared communication medium to determine whether or not the shared communication medium is occupied, i.e., determine whether or not the shared communication medium is in use. Responsive to determining that the shared communication medium is occupied, the physical layer circuitry may provide a/the indication that the shared communication medium is occupied to the data transmission control module - which may then assert the carrier sense signal CRS. Similarly, responsive to determining that the shared communication medium is not occupied, the physical layer circuitry may provide the indication that the shared communication medium is unoccupied to the data transmission control module - which may then deassert the carrier sense signal CRS.

The data transmission control module 310 and/or physical layer circuitry may thereby assert the CRS signal CRS to indicate that the shared communication medium is currently in use. This may occur when another device is transmitting data or when any other activity is detected on the medium. By controlling the CRS signal, the data transmission control module and/or physical layer circuitry is able to inform the media access control module about the availability of the medium for transmission.

Accordingly, as previously mentioned, the media access control module may be configured to monitor the CRS signal and refrain from initiating transmission when the CRS signal is asserted, e.g., even if the hold signal is deasserted. This helps prevent potential collisions by ensuring the media access control module does not attempt to transmit when the shared communication medium is already in use.

In some examples, the physical layer circuitry may be responsible for detecting collisions on the shared communication medium and asserting the COL signal accordingly. When the physical layer circuitry detects simultaneous transmissions from multiple devices on the shared medium, it may assert the COL signal to inform the media access control module and the data transmission control module of the collision event.

Although not illustrated, one or more other modules of the electronic device may also be capable of controlling or asserting the CRS signal and/or the COL signal. This improves the overall reliability and efficiency of the system.

The one or more data transmit lines TXD of the media access control module may connect to the data transmission control module.

In some examples, the data transmission control module may include a data gate that controls the flow of data between the media access control module and the physical layer circuitry. When the hold signal is deasserted, the data gate may become conductive to allow data to pass through the data transmission control module from the media access control module to the physical layer circuitry.

The data transmission control module may be unable to receive and buffer the first datagram, for communication over the shared communication medium, from the media access control module.

In this way, the media access control module retains full control over datagram buffering and transmission, while the data transmission control module concentrates on managing the hold signal and controlling the transmission timing to indicate when transmission is permitted.

Preventing the data transmission control module from receiving datagrams eliminates any potential data duplication or synchronization issues that could arise if both modules were to buffer the same data.

In some examples, the data transmission control module is configured to deassert the hold signal to the media access control module at the beginning of each transmit opportunity. In other words, the data transmission control module may immediately deassert the hold signal when the transmit opportunity for the electronic device begins, allowing the media access control module to start transmitting data without delay if it has data ready to send.

In other examples, the data transmission control module is configured to deassert the hold signal to the media access control module after a first predefined interpacket gap elapses after the beginning of each transmit opportunity. This may help ensure any transmission of the datagram by the data transmission control module complies with network timing requirements and protocol specifications. The interpacket gap provides a buffer period to allow for synchronization and proper signal propagation across the shared communication medium.

The media access control module begins data transmission immediately upon detecting the hold signal's deassertion.

It has been previously mentioned how (when operating in a first mode) the media access control module is configured to prevent the transmission of the first datagram, for communication over the shared communication medium, out of the media access control module whilst the hold signal is being asserted.

In some examples, the media access control module is configured to prevent any part of the first datagram from being transmitted out of the media access control module while the hold signal is asserted. This may include preventing the transmission of any preamble, start frame delimiter, or other components of the datagram.

Thus, in some examples, the media access control module may buffer the entire datagram internally until the hold signal is deasserted, at which point it may begin transmitting the complete datagram.

In other examples, the media access control module may hold the value of the transmit data (signals) TXD at the first symbol of the datagram until the hold signal is deasserted. In this case, the media access control module may prepare the first symbol of the datagram on the transmit data signals TXD but maintain that value without advancing to subsequent symbols until the hold signal transitions to a deasserted state.

This approach allows for a faster start to transmission once the hold signal is deasserted, as the first symbol is already prepared and ready for immediate transmittal.

The media access control (MAC) module may be operable in one or more other modes in addition to the first mode described above. These additional modes may provide flexibility in network communication and allow the MAC module to adapt to different network configurations or requirements.

In some implementations, the MAC module may be operable in a standard Ethernet mode. In this mode, the MAC module may function according to traditional Ethernet protocols without utilizing the hold signal or any other collision avoidance mechanism described earlier. This mode may be suitable for full duplex networks.

The skilled person will also appreciate that there is provided a communication arrangement for an electronic device. The communication arrangement comprises any herein proposed data transmission control module and any herein proposed media access control module.

In some examples, the data transmission control module and the media access control module are formed from separable chiplets. In other words, the data transmission control module and the media access control module may be implemented as separate, physically distinct semiconductor chips or chiplets that can be integrated onto a common substrate or package. This modular approach may allow for greater flexibility in design and manufacturing.

In some examples the data transmission control module and the media access control module may be integrated within a same system-on-a-chip, e.g., within a same package. This helps reduce decrease the physical footprint of the device.

The communication arrangement may comprise a hold line connected between the media access control module and the data transmission control module, which hold line carries the hold signal.

The communication arrangement may comprise a carrier sense line, that carries a carrier sense signal, between the data transmission control module and the media access control module. The data transmission control module may be configured to: assert the carrier sense signal responsive to an indication that the shared communication medium is occupied; and deassert the carrier sense signal responsive to an indication that the shared communication medium is unoccupied. The media access control module may be configured to, responsive to the carrier sense signal being asserted, prevent the transmission of data, for communication over the shared communication medium, out of the media access control module.

Similarly, if used, the collision detect signal may be carried by a collision detect line connected between the data transmission control module and the media access control module.

The communication arrangement may further comprise physical layer circuitry for connection to the shared communication medium. The physical layer circuitry is configured to translate the first datagram into a physical signal for delivery over the shared communication medium. In particular, the physical layer circuitry takes the first datagram and converts it into a format suitable for transmission over the physical medium. This may comprise steps of encoding, framing, line coding, signal modulation and subsequent transmission (on the physical shared communication medium).

As previously mentioned, the physical layer circuitry may comprise respective modules for functioning as the physical coding sublayer (PCS), a physical medium attachment (PMA) sublayer, and a physical medium dependent (PMD) sublayer.

Preferably, the module embodying the physical medium dependent (PMD) sublayer is formed on a separate chip to the remainder of the physical layer circuitry (i.e., the modules embodying the PCS and the PMA). In such examples, the module embodying the PMD may be connected to the remainder of the physical layer circuitry via no more than 3 pins, e.g., the Open Alliance 3 pin interface (OA3p).

In some examples, the module(s) embodying the PCS and the PMA may be integrated into a same system-on-a-chip (e.g., within the same package) as the data transmission control module and preferably the media access control module.

In some examples, the physical layer circuitry connects to the data transmission control module via a media-independent interface (MII). This standardized interface allows for greater flexibility and interoperability between different components of the network stack, whilst still defining a standard set of signals and timing requirements for communication between the physical layer and the data link layer. This modular approach enables manufacturers to mix and match different physical layer and data link layer implementations, e.g., from different vendors, as long as they adhere to the MII standard.

There is also provided a communication network comprising a plurality of electronic devices, each electronic device comprising the communication arrangement herein described and being communicatively connected by the shared communication medium.

Preferably, the shared communication medium is an ethernet cable.

The arrangements as discussed above may be used in a communications method that is fully compatible with the IEEE standard 10 Base T1S, i.e. in which the signals on the ethernet cable fully match those proposed in the standard, even though the hardware proposed above differs from that proposed in the standard, for example in that the IEEE standard as presently drafted proposes a physical layer collision avoidance (PLCA) module having a first in first out, FIFO, buffer, in addition to a buffer in the MAC. This causes considerable complexity in the IEEE standard version. When the device is ready to transmit, it transmits a small amount of data to the PLCA which holds the data in the buffer. If the device is able to transmit before any other device transmits, it starts transmitting directly from the buffer in the PLCA. If on the other hand another device starts transmitting first, in the standard 10 Base T1S proposal the small buffer in the PLCA is cleared; when the device gets a turn to transmit, the PLCA uses the carrier sense signal to transmit back to the MAC that transmission can take place; the MAC then transmits data to the buffer in the PLCA and the data is transmitted onwards from there. This all introduces a significant and variable delay in the standard approach.

In the arrangement as discussed above, the addition of the hold line enables the PCLA of the standard to be replaced by the proposed data transmission control module, without a buffer. This may reduce the time from the transmission window starting to the time data is transmitted; moreover the delay in transmission may therefore be less variable. Yet further, the omission of the buffer in the PLCA may result in a lower total chip area.

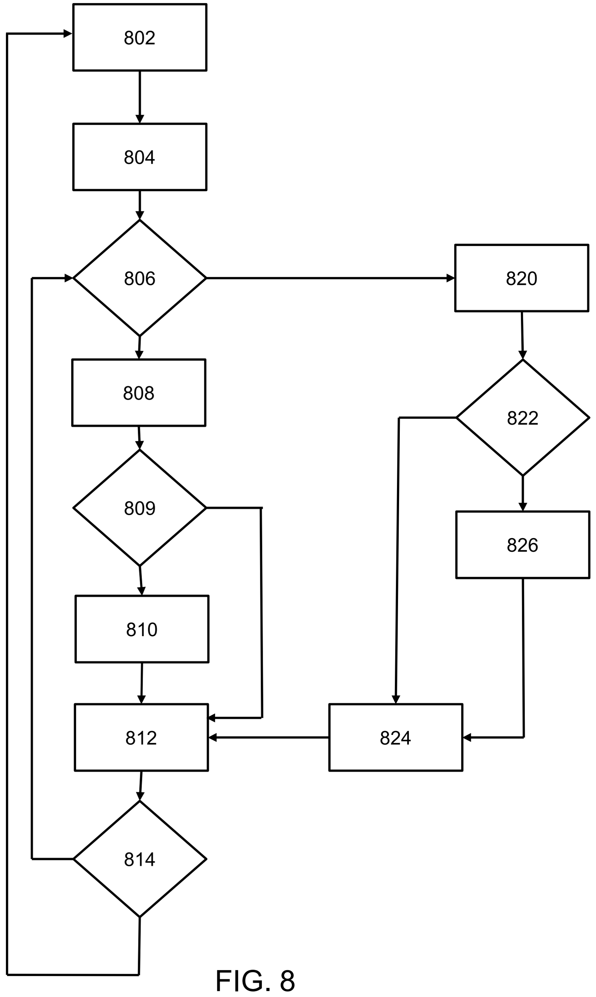

Thus, the arrangement as discussed above may operate as follows, with reference to Fig. 8. In this example, there are N devices on the network. Each of the N devices is identified by a unique identity number I, an integer in the range [0,(N-1)]

In a first step 802, if the device is the device with the identity number 0, the data transmission control module transmits a beacon signal on the ethernet to synchronize the devices on the ethernet. Otherwise, the device waits for the beacon signal from the device with identity number 0.

In a second step 804, the device counter D is initialized to 0. At this time, the hold signal is asserted to prevent the media access control module from transmitting a signal.

In a third step, 806, it is tested if the device counter D equals the identity number I.

If not, then it is the transmit opportunity of another device with the identity number equal to the device counter D. In this case processing continues at step 808 where the device waits for a predetermined time and tests 809 if data is received on the ethernet. This received data may be an assertion that the device with identity number equal to device counter D wishes to transmit or alternatively the data may be the start of an ethernet frame.

If data is received, at step 810 the device waits for an ethernet frame to be transmitted and completed. If the ethernet frame includes an indication in the ethernet frame header that the ethernet frame is intended for the device, the ethernet frame is passed to the MAC for processing.

After receiving the ethernet frame in step 810 then at step 812 the device counter is incremented by 1. Note, this step is also completed in the case after the processing, to be discussed below, triggered if the device counter D does equal the identity number I.

At step 814 it is tested whether the device counter D has reached N. If so, processing returns to first step 802. Otherwise, processing returns to step 806. Thus, the device counter counts up to give each device in turn a transmit opportunity. Note that the counting is done by each device separately; the predetermined time is the same for each device.

In the event that the test at the third step indicates that the device counter equals the identity number I, then processing continues at step 820 in which the hold signal is disasserted.

If the MAC has data to transmit, the MAC will now begin transmitting data. The data is routed through the data transmission control module which does not buffer the data but simply checks to see (step 822) if data is transmitted by the MAC within the predetermined time. As this example relates to ethernet, the data will be in the form of an ethernet frame.

If no data is being transmitted in the predetermined time, the hold signal is reasserted (step 824) and processing is then passed to step 812.

Otherwise, the data transmission control module waits for the end of the transmission of the ethernet frame at step 826. Only thereafter is the processing passed to step 824 to reassert the hold signal and continue.

It will be noted that this approach is fully compatible with 10 Base T1S, in that the signals on the line are exactly the same as those determined by the standard. The internal processing is however a little different; the internal state machine has the same effect on the ethernet line as that proposed in the standard but is not identical to that proposed in the standard.

Although the above description discusses counting upwards, the device counter may in the alternative count downwards. For example, the device counter may be initialised in sept 804 to the identity number. Instead of counting upwards, the device counter may count down. In this alternative, the transmit opportunity occurs when the device counter reaches zero. This may ease some hardware implementations as the unique identity number is then only required during the initialization step 804 which occurs once per complete cycle and not at test step 806 which occurs in each loop.

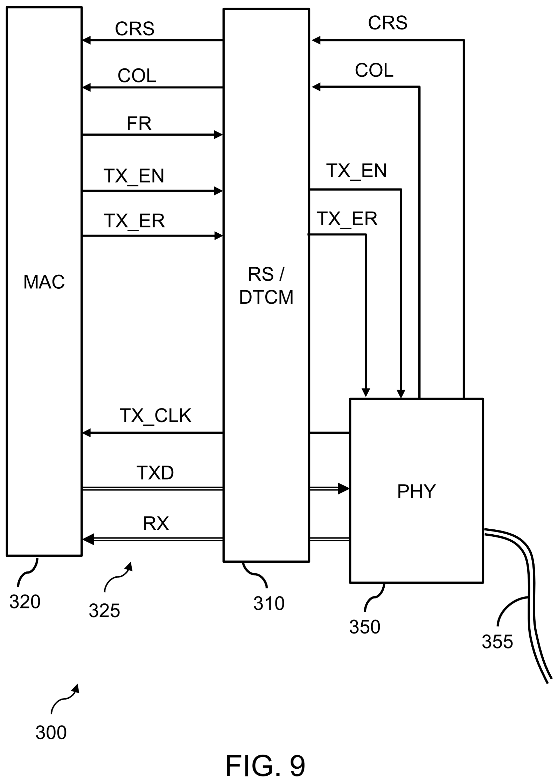

Referring to Figure 9, another example will now be described. In this example, a transmit ready signal from MAC to PHY is additionally provided on a transmit ready line indicated as FR in Figure 9.

The transmit ready signal is a frame available signal that is sent by the MAC to indicate that there is a frame pending and ready for transmission. Typically, the signal will be triggered when there is a frame in a MAC first in first out, FIFO, buffer ready to transmit.

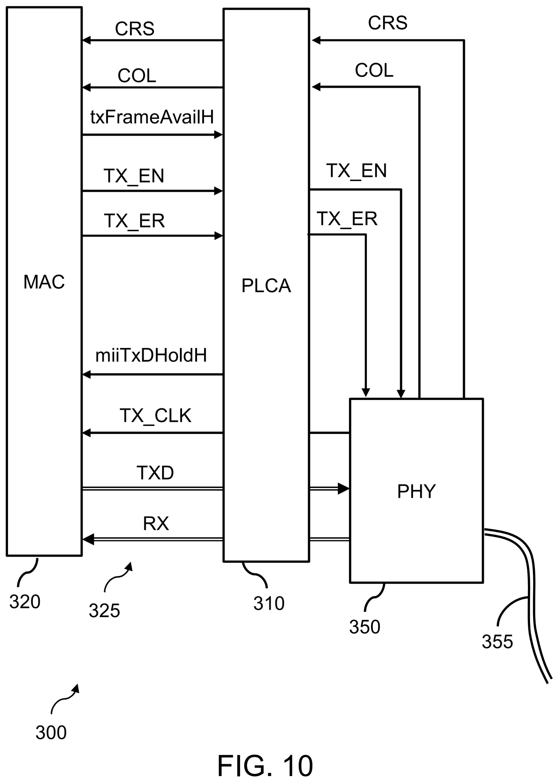

Referring to Figures 10 to 13, another example will now be described, in which a semiconductor device has both a hold signal and a transmit ready signal.

Figure 10 illustrates the device; the additional signal lines are indicated: the frame available signal will be referred to as txFrameAvailH and the hold signal miiTXDHoldH. Note that the PLCA 310 carries out the same function as the data transmission control module (DTCM) 310 which functions as a reconciliation sublayer (RS) in Figure 3.

Note that in this device the use of the frame available signal txFrameAvailH and the hold signal miiTXDHoldH are optional and may be controlled by a register which controls the PLCA. This allows the PLCA to be used with legacy equipment, including legacy MACs which do not provide the additional functionality of these two lines.

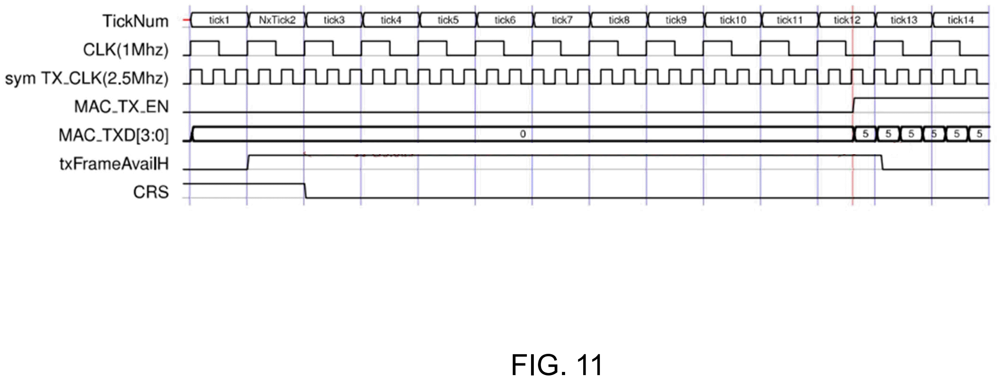

Figure 11 illustrates the use of the txFrameAvailH in an arrangement with a carrier sense signal (CRS). The upper line illustrates the tick number. The second line is the main clock frequency, 1MHz. The third line illustrates the transmit clock, TX_CLK, as defined in the standard, and which in this case is 2.5MHz. The fourth line shows the MAC TX_EN signal, the fifth line the four bit transmit data signals MAC_TXD[3,0] , the sixth line the txFrameAvailH and the final line the CRS signal.

The sequence of events for a transmission is as follows.
1. A frame becomes available in the MAC.
2. The MAC asserts txFrameAvailH to indicate that a frame is ready for transmission.
3. CRS is asserted during tick 1 and tick 2, preventing frame transmission.
4. At tick 3, CRS is de-asserted allowing the MAC to begin the transmit process.
5. The MAC waits for the interpacket gap, IPG, time, from tick 3 to tick 12, i.e. 9.6 µs. This ensures that the packet for transmission is not transmitted too soon.
6. Transmission starts at tick 12 and txFrameAvailH de-asserts if no other frames are pending as soon as the first nibble crosses the MII interface between MAC and PLCA: If other frames are pending txFrameAvailH remains asserted until the last frame crosses the MII interface.

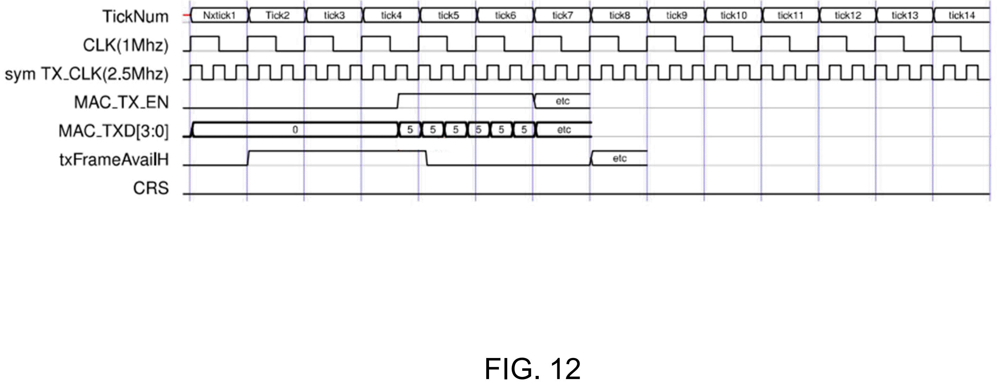

Figure 12 illustrates the use of the txFrameAvailH in an arrangement without a carrier sense signal. The signals are the same as in Figure 11. Note that in this case the transmission starts sooner as there is no wait for the IPG time. Instead, the transmission starts after a latency time determined by the transmission process.

Note that this approach works slightly differently between MAC and PHY to a standard 10 Base T1S approach. In particular, in the standard approach a nibble is transmitted from MAC to PLCA and this informs the PLCA that a frame is ready for transmission. In the approach of Figures 10, 11 and 12 there is no need for such a transmission as the frame available signal works instead. At some point after receiving the frame available signal, the PLCA gets its turn to transmit and then communicates this back to the MAC so that the MAC starts transmitting the nibbles of the frame at a time when the PLCA can onwards transmit the signals (nibbles) to the PHY and hence onwards to the 10 Base T1S link.

Importantly, this difference in the internal operation of the MAC and PLCA is transparent and as far as every other node on a network is concerned this makes no difference; other nodes simply see a standard 10 Base T1S node, albeit one that can operate slightly faster and more efficiently.

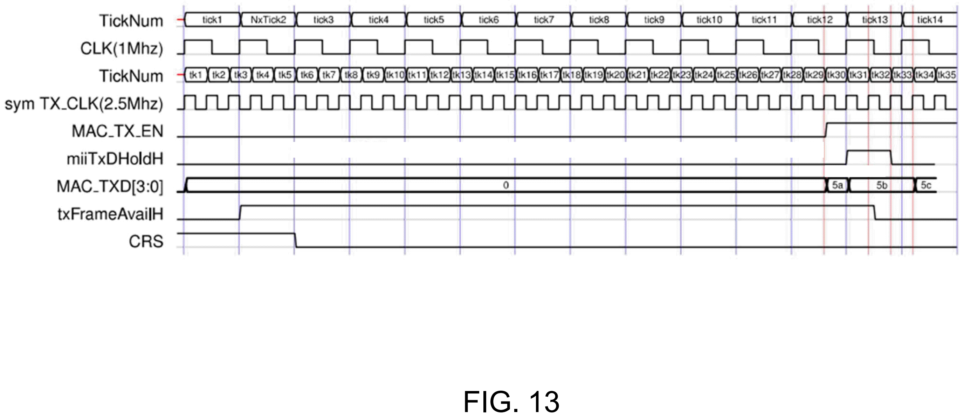

Figure 13 illustrates the use of the miiTXDHoldH signal in addition to the txFrameAvailH signal. The same signals as in Figure 11 are illustrated together with an additional signal line, the miiTxDHoldH signal, which is sent by the PLCA back to the MAC to apply back pressure to the transfer of a data nibble, by informing the MAC to hold the current nibble. This allows the PLCA to apply back pressure without using the CRS or COL signals. In particular, using the signal COL is only used to signal real collisions. This means that the MAC does not need to wait for the back-off time when the signal miiTXDHoldH is asserted. In contrast, in a conventional 10Base T1S approach, the PLCA signals using the COL signal even in cases where there is no real collision, so the MAC needs to wait for the backoff time unnecessarily in the case there is no real collision. In the approach described here, when the signal miiTXDHoldH is de-asserted data transmission can begin immediately.

As an aside, note that when the signal miiTXDHoldH is de-asserted the MAC can start transmitting immediately. In the standard 10Base T1S approach the MAC inserts the IPG. In the presently described arrangement, the PLCA may need to insert an IPG if required to keep the interpacket gap requirements of the 10Base T1S standard met.

The sequence of events for a transmission is as follows.
1. A frame becomes available in the MAC, and the MAC presents a nibble of value 5 (shown as 5a).
2. The MAC asserts txFrameAvailH to indicate that a frame is ready for transmission at tk30 in Figure 18.
3. In response, at tk31, miiTXDHoldH is asserted to hold the nibble 5 (shown as 5b) on the bus.

Note, miiTXDHoldH can assert for N clock ticks and once disasserted it will not assert again for that frame on that transmission attempt. The signal miiTXDHoldH should assert before the first nibble of the preamble of the frame but not after the nibble has crossed into the PHY. The signal miiTXDHoldH can assert before TX_EN is asserted and does not prevent TX_EN asserting.

Note, in this example there is no need for a buffer to be present in the PLCA; all buffering can be carried out in the MAC and controlled using the signals as described above. Such an arrangement, without a buffer in the PLCA but using one or more additional signals can reduce jitter in signal transmission.

The use of the frame available signal and the hold signal may be optional; in particular the PLCA block may be configured to use or not to use the signal, for example by a register entry. This allows the PLCA block to be used with legacy MACs which do not use the frame available signal as well as with MACs which do use one or both of these signals. Further, the use of the signals may be separately determined so that none, either one or both of these signals may be used in any particular design.

In addition to the above-described examples, the following examples are disclosed.

Example 1: A data transmission control module for an electronic device of a communication network, wherein the electronic device is configured to only transmit data to one or more other electronic devices of the communication network over a shared communication medium during any transmit opportunities for the electronic device,
wherein the data transmission control module is configured to, at least when there is an indication from a media access control module of the electronic device that there is a first datagram to be transmitted:
outside of every transmit opportunity for the electronic device, continually assert a hold signal to the media access control module to prevent the media access control module from transmitting the first datagram, for communication over the shared communication medium, out of the media access control module; and
at each transmit opportunity for the electronic device, deassert the hold signal to the media access control module of the electronic device to permit the media access control module to transmit the first datagram, for communication over the shared communication medium, out of the media access control module.

Example 2. The data transmission control module of example 1, wherein the data transmission control module is unable to receive and buffer the first datagram, for communication over the shared communication medium, from the media access control module.

Example 3. The data transmission control module of any one of examples 1 or 2, wherein the data transmission control module is configured to deassert the hold signal to the media access control module at the beginning of each transmit opportunity.

Example 4. The data transmission control module of any one of examples 1 or 2, wherein the data transmission control module is configured to deassert the hold signal to the media access control module after a first predefined interpacket gap elapses after the beginning of each transmit opportunity.

Example 5. The data transmission control module of any one of examples 1 to 4, wherein the data transmission control module is further configured to monitor for the indication from the media access control module to determine whether or not there is a first datagram to be transmitted.

Example 6. The data transmission control module of example 5, wherein the data transmission control module is configured to, outside of every transmit opportunity for the electronic device, only assert the hold signal to the media access control module of the electronic device responsive to determining that there is a first datagram to be transmitted.

Example 7. The data transmission control module of any one of examples 1 to 5, wherein the data transmission control module is further configured to, outside of every transmit opportunity for the electronic device, continually assert the hold signal to the media access control module of the electronic device.

Example 8. The data transmission control module of example 7, when dependent upon example 6, wherein the data transmission control module is further configured to, at every transmit opportunity for the electronic device, only deassert the hold signal, to the media access control module of the electronic device, responsive to determining that there is a first datagram to be transmitted.

Example 9. The data transmission control module of example 7, wherein the data transmission control module is further configured to deassert the hold signal, to the media access control module, at every transmit opportunity for the electronic device.

Example 10. A media access control module for an electronic device of a communication network, wherein the electronic device is configured to only transmit data to one or more other electronic devices of the communication network over a shared communication medium during any transmit opportunities for the electronic device, wherein the media access control module is configured to, when operating in a first mode:
monitor a hold signal received from a data transmission control module;
for transmitting a first datagram:
   responsive to the hold signal being asserted, prevent the transmission of the first datagram, for communication over the shared communication medium, out of the media access control module; and
   responsive to the hold signal being deasserted, immediately transmit the first datagram out of the media access control module.

Example 11. The media access control module of example 10, wherein the media access control module is configured to, when operating in the first mode:
provide an indication to the data transmission control module of the electronic device when there is a first datagram to be transmitted; and
only transmit the first datagram when the hold signal is deasserted responsive to the provided indication to the data transmission control module.

Example 12. The media access control module of example 10 or 11, wherein the media access control module is configured to, when operating in the first mode, prevent any transmission of the first datagram out of the media access control module until the hold signal is deasserted.

Example 13. The media access control module of any one of examples 10 to 12, wherein the media access control module is configured to record a time at which the first datagram is transmitted out of the media access control module.

Example 14. A communication arrangement for an electronic device comprising:
the data transmission control module of any one of examples 1 to 9; and
the media access control module of any one of examples 10 to 13.

Example 15. The communication arrangement of example 14, wherein the data transmission control module and the media access control module are formed from separable chiplets.

Example 16. The communication arrangement of example 14 or 15, further comprising physical layer circuitry for connection to the shared communication medium, wherein the physical layer circuitry is configured to translate the first datagram into a physical signal for delivery over the shared communication medium.

Example 17. The communication arrangement of example 16, wherein the physical layer circuitry connects to the data transmission control module via a media-independent interface.

Example 18. A communication arrangement for an electronic device of a communication network, wherein the electronic device is configured to only transmit data to one or more other electronic devices of the communication network over a shared communication medium during any transmit opportunities for the electronic device, wherein the communication arrangement comprises:
a media access control module for transmitting a first datagram via the shared communication medium;
a data transmission control module; and
a hold line, configured to carry a hold signal, wherein the hold line is connected between the media access control module and the data transmission control module;
wherein the data transmission control module is configured to, at least when there is an indication from the media access control module of the electronic device that there is a first datagram to be transmitted:
   outside of every transmit opportunity for the electronic device, continually assert the hold signal; and
   at each transmit opportunity for the electronic device, deassert the hold signal;
and wherein the media access control module is configured to, when operating in a first mode:
   monitor the hold signal; and
   for transmitting a first datagram:
      responsive to the hold signal being asserted, prevent the transmission of the first datagram, for communication over the shared communication medium, out of the media access control module; and
      responsive to the hold signal being deasserted, immediately transmit the first datagram out of the media access control module.

Example 19. The communication arrangement of example 18, further comprising a carrier sense line connected between the media access control module and the data transmission control module, wherein:
the data transmission control module is configured to:
   assert the carrier sense signal responsive to an indication that the shared communication medium is occupied; and
   deassert the carrier sense signal responsive to an indication that the shared communication medium is unoccupied; and
the media access control module is configured to, responsive to the carrier sense signal being asserted, prevent the transmission of data, for communication over the shared communication medium, out of the media access control module.

Example 20. The communication arrangement of example 18 or 19, further comprising physical layer circuitry for connection to the shared communication medium, wherein the physical layer circuitry is configured to translate the first datagram into a physical signal for delivery over the shared communication medium.

Example 21. The communication arrangement of example 20, when dependent upon example 15, wherein the physical layer circuitry is configured to:
monitor an occupancy of the shared communication medium to determine whether or not the shared communication medium is occupied; and
responsive to determining that the shared communication medium is occupied, provide the indication that the shared communication medium is occupied to the data transmission control module; and
responsive to determining that the shared communication medium is not occupied, provide the indication that the shared communication medium is unoccupied to the data transmission control module.

Example 22. A communication network comprising a plurality of electronic devices, each electronic device comprising the communication arrangement of any one of examples 14 to 21 and being communicatively connected by the shared communication medium.

Example 23. The communication network of example 22, wherein the shared communication medium is an ethernet cable.

Example 24. A method of communication of an electronic device of a communication network, wherein the electronic device is configured to only transmit data to one or more other electronic devices of the communication network over a shared communication medium during any transmit opportunities for the electronic device, comprising:
continually asserting a hold signal to the media access control module, at least when there is an indication from a media access control module of the electronic device that there is a first datagram to be transmitted, outside every transmit opportunity for the electronic device, to prevent the media access control module from transmitting the first datagram, for communication over the shared communication medium, out of the media access control module; and
at each transmit opportunity for the electronic device, deasserting the hold signal to the media access control module of the electronic device to permit the media access control module to transmit the first datagram, for communication over the shared communication medium, out of the media access control module.

Example 25. A method of communication of a media access control module for an electronic device of a communication network, wherein the electronic device is configured to only transmit data to one or more other electronic devices of the communication network over a shared communication medium during any transmit opportunities for the electronic device,
comprising,
when operating in a first mode, monitoring a hold signal received from a data transmission control module;
for transmitting a first datagram:
   responsive to the hold signal being asserted, preventing the transmission of the first datagram over the shared communication medium, out of the media access control module; and
   immediately transmitting the first datagram out of the media access control module. responsive to the hold signal being deasserted.

Example 26. A method of communication of an electronic device of a communication network, wherein the electronic device a has a media access control module for transmitting a first datagram via a shared communication medium, a data transmission control module and a hold line, configured to carry a hold signal, connected between the media access control module and the data transmission control module, the electronic device being configured to only transmit data to one or more other electronic devices of the communication network over a shared communication medium during any transmit opportunities for the electronic device, the method comprising:
in the data transmission control module, outside of every transmit opportunity for the electronic device, continually asserting the hold signal; and
at each transmit opportunity for the electronic device, deasserting the hold signal, with the data transmission control module; and
in the media access control module, when operating in a first mode:
   monitoring a hold signal received from a data transmission control module;
   in case of transmitting a first datagram:
      responsive to the hold signal being asserted, preventing the transmission of the first datagram over the shared communication medium, out of the media access control module; and
      immediately transmitting the first datagram out of the media access control module. responsive to the hold signal being deasserted.

Example 27. A method of ethernet communication using an electronic device having a media access control module, a data transmission control module and a hold line, configured to carry a hold signal, connected between the media access control module and the data transmission control module, and an ethernet transceiver connected to an ethernet link, the method comprising:
asserting the hold signal;
sending or receiving a beacon signal through the ethernet transceiver;
initialising a device counter;
cycling the device counter through a set of values corresponding to devices on the ethernet link; and
when the device counter indicates that the electronic device has a transmit opportunity, deasserting the hold signal to allow the media access control module to transmit a datagram over the ethernet link.

Example 28. A method according to example 27, further comprising, when the media access control has an ethernet frame comprising datagrams to transmit and the hold signal is deasserted to indicate that the electronic device has a transmit opportunity, transmitting the ethernet frame over the ethernet link.

Example 29. A method according to example 27 or 28, wherein the electronic device has a unique identity I, the step of initializing the device counter initializes the device counter D to 0, the method comprising incrementing the device counter D once per cycle, comparing the device counter D to the unique identity I and identifying a transmit opportunity when the device counter D equals the unique identity I.

Example 30. A method according to example 27 or 28, wherein the electronic device has a unique identity I, the step of initializing the device counter initializes the device counter D to I, the method comprising decrementing the device counter by one once per cycle and identifying a transmit opportunity when the device counter D equals zero.

Example 31. A method according to any one of examples 27 to 30, further comprising the data transmission control module continually asserting the hold signal to the media access control module of the electronic device outside of every transmit opportunity for the electronic device.

Example 32. A method according to any one of examples 27 to 31, further comprising the data transmission control module sending a trigger signal to the media access control module of the electronic device to indicate a transmit opportunity for the electronic device.

Example 33. A method according to any of examples 27 to 32, wherein the media access control module:
monitors a hold signal received from a data transmission control module;
responsive to the hold signal being asserted, prevents the transmission of the first datagram, for communication over the shared communication medium, out of the media access control module; and
responsive to the hold signal being deasserted, immediately transmits the first datagram out of the media access control module.

Example 34. An electronic device having a media access control module, a data transmission control module and a hold line, configured to carry a hold signal, connected between the media access control module and the data transmission control module, and an ethernet transceiver for connection to an ethernet link, the electronic device being arranged to:
assert the hold signal;
send or receive a beacon signal through the ethernet transceiver;
initialize a device counter;
cycle the device counter through a set of values corresponding to devices on the ethernet link; and
when the device counter indicates that the electronic device has a transmit opportunity, deassert the hold signal to allow the media access control module to transmit a datagram over the ethernet link.

Example 35. An electronic device according to example 34 wherein the data transmission control module is further configured to continually assert the hold signal to the media access control module of the electronic device, outside of every transmit opportunity for the electronic device.

Example 36. A network comprising
an electronic device having a media access control module, a data transmission control module and a hold line, configured to carry a hold signal, connected between the media access control module and the data transmission control module, and an ethernet transceiver;
an ethernet link connected to the ethernet transceiver;
a further electronic device connected to the ethernet link;
wherein each of the electronic device and further device is arranged to:
   send or receive a beacon signal through the ethernet transceiver;
   initialize a device counter;
   cycle the device counter through a set of values corresponding to devices on the ethernet link;
   transmit an available datagram when the device counter corresponds to the said electronic device or further device; and
   otherwise to operate in a receive mode to receive datagrams when the device counter does not correspond to the said electronic device or further device;
   wherein in the electronic device is arranged to deassert the hold signal, when the device counter indicates that the electronic device has a transmit opportunity, to allow the media access control module to transmit a datagram over the ethernet link.

Example 37. A network according to example 36, being a multidrop network with a plurality of said further devices.

Example 38. A network according to example 36 or 37, wherein the electronic device is further arranged to transmit an ethernet frame over the ethernet link when the media access control has an ethernet frame comprising datagrams to transmit and the hold signal is deasserted to indicate that the electronic device has a transmit opportunity.

Example 39. A network according to example 36, 37 or 38, wherein the electronic device has a unique identity I and is arranged to:
initialize the device counter D to 0,
increment the device counter D once per cycle,
compare the device counter D to the unique identity I; and
identify a transmit opportunity when the device counter D equals the unique identity I.

Example 40. A network according to example 36, 37, or 38, wherein the electronic device has a unique identity I and is arranged to:
initialize the device counter D to I,
decrement the device counter D once per cycle,
compare the device counter D to 0; and
identify a transmit opportunity when the device counter D equals 0.

Example 41. A method of operating a network comprising:
an electronic device having a media access control module, a data transmission control module and a hold line, configured to carry a hold signal, connected between the media access control module and the data transmission control module, and an ethernet transceiver;
an ethernet link connected to the ethernet transceiver; and
a further electronic device connected to the ethernet link;
the method comprising:
   initializing a device counter;
   cycling the device counter through a set of values corresponding to devices on the ethernet link;
   deasserting the hold signal, when the device counter indicates that the electronic device has a transmit opportunity, to allow the media access control module to transmit a datagram over the ethernet link.
   transmitting an available datagram when the device counter corresponds to the said electronic device or further device; and
   otherwise to operating in a receive mode to receive datagrams when the device counter does not correspond to the said electronic device or further device.

Example 42. The communication arrangement according to example 14, further comprising:
a hold signal line connected between the data transmission control module and the media access control module for transmitting a hold signal from the data transmission control module to the media access control module; and
a frame available signal line connected between the media access control module and the data transmission control module for transmitting a hold signal from the media access control module to the data transmission control module.

Example 43. The communication arrangement of example 42 further comprising:
a collision detected signal line to the media access control module, for receiving a collision detect signal (COL) from physical layer circuitry on detection of a collision on the data link, wherein the media access control module is arranged to back off transmission for a predetermined back off time when it receives the collision detect signal; and
a carrier sense line to the media access control module for receiving a carrier sense signal (CRS) when a signal transmitted by another node on the data link is detected, wherein the media access control module is arranged to wait an interpacket gap (IPG) before transmitting a first datagram after detecting that the carrier sense signal is disasserted.

Example 44. A data transmission control module for an electronic device of a communication network, wherein the electronic device is configured to only transmit data to one or more other electronic devices of the communication network over a shared communication medium during any transmit opportunities for the electronic device,
wherein the data transmission control module is configured to
receive from a media access control module of the electronic device a frame available signal that there is a first datagram to be transmitted:
when a transmit opportunity for the electronic device occurs, and the frame available signal is asserted, to send a signal to the to the media access control module of the electronic device for causing the media access control module to transmit the first datagram,
to receive the first datagram; and
to transmit the datagram onwards towards the shared communication network.

Example 45. A data transmission module according to example 44, wherein the data transmission control module is further configured to, at least when a frame available signal has been received from a media access control module of the electronic device that there is a first datagram to be transmitted:
outside of every transmit opportunity for the electronic device, continually assert a hold signal to the media access control module to prevent the media access control module from transmitting the first datagram, for communication over the shared communication medium, out of the media access control module; and
at each transmit opportunity for the electronic device, deassert the hold signal to the media access control module of the electronic device to permit the media access control module to transmit the first datagram, for communication over the shared communication medium, out of the media access control module.

Example 46. A data transmission control module according to example 44 or 45,
wherein the data transmission module is arranged; when a transmit opportunity for the electronic device occurs and the data transmission control module receives the first datagram,
to transmit the datagram onwards directly and without buffering towards the shared communication network.

Example 47. A method of communication of an electronic device of a communication network, wherein the electronic device is configured to only transmit data to one or more other electronic devices of the communication network over a shared communication medium during any transmit opportunities for the electronic device, comprising:
receiving from a media access control module of the electronic device a frame available signal that there is a first datagram to be transmitted:
when a transmit opportunity for the electronic device occurs, and the frame available signal is asserted, sending a signal to the to the media access control module of the electronic device to cause the media access control module to transmit the first datagram, for communication over the shared communication medium, out of the media access control module,
receiving the first datagram and
transmitting the datagram onwards towards the shared communication network:

Example 48. A method according to example 47, further comprising
continually asserting a hold signal to the media access control module, at least when there is an indication from a media access control module of the electronic device that there is a first datagram to be transmitted, outside every transmit opportunity for the electronic device, to prevent the media access control module from transmitting the first datagram, for communication over the shared communication medium, out of the media access control module; and
at each transmit opportunity for the electronic device, deasserting the hold signal to the media access control module of the electronic device to permit the media access control module to transmit the first datagram, for communication over the shared communication medium, out of the media access control module.

Example 49. A media access control module for an electronic device of a communication network, wherein the electronic device is configured to only transmit data to one or more other electronic devices of the communication network over a shared communication medium during any transmit opportunities for the electronic device, wherein the media access control module is configured to, when operating in a first mode:
transmit a frame available signal when the media access control signal has a frame available for transmission, the frame including a first datagram:
monitor a signal received from a data transmission control module;
for transmitting a first datagram:
   responsive to the monitored signal, prevent the transmission of the first datagram, for communication over the shared communication medium, out of the media access control module until the signal indicates that the data transmission control module is ready to transmit and then immediately transmit the first datagram out of the media access control module.

Example 50. A communication arrangement for an electronic device comprising:
a data transmission control module;
a media access control module;
a hold signal line connected between the data transmission control module and the media access control module for transmitting a hold signal from the data transmission control module to the media access control module; and
a frame available signal line connected between the media access control module and the data transmission control module for transmitting a hold signal from the media access control module to the data transmission control module; wherein
herein the data transmission control module is configured to
receive from a media access control module of the electronic device a frame available signal that there is a first datagram to be transmitted along the frame available signal line;
continually assert a hold signal to the media access control module along the hold signal line, outside every transmit opportunity for the electronic device, to prevent the media access control module from transmitting the first datagram,
when a transmit opportunity for the electronic device occurs, and the frame available signal is asserted, disassert the hold signal to the media access control module of the electronic device to cause the media access control module to transmit the first datagram, for communication over the shared communication medium, out of the media access control module,
receive the first datagram and
transmit the datagram onwards towards the shared communication network.

Example 51. A communication arrangement for an electronic device according to example 50;
further comprising physical layer circuitry for driving a data link, wherein the data transmission control module is provided between the physical layer circuitry and the media access control module;
a collision detected signal line from the physical layer circuitry to the media access control module, wherein the physical layer circuitry is arranged to send a collision detect signal (COL) when it detects a collision on the data link, and the media access control module is arranged to back off transmission for a predetermined back off time when it receives the collision detect signal; and
a carrier sense line from the physical layer circuitry to the media access control module, wherein the physical layer is arranged to transmit a carrier sense signal (CRS) when it detects a signal from another node on the data link, and wherein the media access control module is arranged to wait an interpacket gap (IPG) before transmitting a first datagram after detecting that the carrier sense signal is disasserted.

Example 52. A data transmission control module for an electronic device of a communication network, wherein the electronic device is configured to only transmit data to one or more other electronic devices of the communication network over a shared communication medium during any transmit opportunities for the electronic device,
wherein the data transmission control module does not have a buffer, being arranged to pass data received from the media access control directly out for transmission over the shared communication medium, and is configured:
when a transmit opportunity for the electronic device occurs, to send a signal to the to the media access control module of the electronic device to cause the media access control module to transmit the first datagram, for communication over the shared communication medium, out of the media access control module,
to receive the first datagram; and
to transmit the datagram onwards on the next clock cycle towards the shared communication network.

Example 53. A data transmission control module according to example 52, wherein the data transmission control module is configured to receive from the media access control module of the electronic device a frame available signal that there is a first datagram to be transmitted: and
when a transmit opportunity for the electronic device occurs, but only when the frame available signal is asserted, to send the said signal to the to the media access control module of the electronic device for causing the media access control module to transmit the first datagram.

Example 54. A data transmission module according to example 53, wherein the data transmission control module is further configured, after receiving the frame available signal outside of every transmit opportunity for the electronic device, to continually assert a hold signal to the media access control module to prevent the media access control module from transmitting the first datagram, for communication over the shared communication medium, out of the media access control module; and
at each transmit opportunity for the electronic device, deassert the hold signal to the media access control module of the electronic device to permit the media access control module to transmit the first datagram, for communication over the shared communication medium, out of the media access control module.

Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

It should be noted that the modules, devices, arrangements and methods including its preferred embodiments as outlined in the present document may be used stand-alone or in combination with the other modules, devices, arrangements and methods disclosed in this document. In addition, the features outlined in the context of a module, device and/or arrangement are also applicable to a corresponding method, and vice versa. Furthermore, all aspects of the modules, devices, arrangements and methods outlined in the present document may be arbitrarily combined. In particular, the features of the claims may be combined with one another in an arbitrary manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiments outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A data transmission control module for an electronic device of a communication network, wherein the electronic device is configured to only transmit data to one or more other electronic devices of the communication network over a shared communication medium during any transmit opportunities for the electronic device,
wherein the data transmission control module is configured to, at least when there is an indication from a media access control module of the electronic device that there is a first datagram to be transmitted:
outside of every transmit opportunity for the electronic device, continually assert a hold signal to the media access control module to prevent the media access control module from transmitting the first datagram, for communication over the shared communication medium, out of the media access control module; and
at each transmit opportunity for the electronic device, deassert the hold signal to the media access control module of the electronic device to permit the media access control module to transmit the first datagram, for communication over the shared communication medium, out of the media access control module.

2. The data transmission control module of claim 1, wherein the data transmission control module is unable to receive and buffer the first datagram, for communication over the shared communication medium, from the media access control module.

3. The data transmission control module of any one of claims 1 or 2, wherein the data transmission control module is configured to deassert the hold signal to the media access control module at the beginning of each transmit opportunity.

4. The data transmission control module of any one of claims 1 or 2, wherein the data transmission control module is configured to deassert the hold signal to the media access control module after a first predefined interpacket gap elapses after the beginning of each transmit opportunity.

5. The data transmission control module of any one of claims 1 to 4, wherein the data transmission control module is further configured to, outside of every transmit opportunity for the electronic device, continually assert the hold signal to the media access control module of the electronic device.

6. A media access control module for an electronic device of a communication network, wherein the electronic device is configured to only transmit data to one or more other electronic devices of the communication network over a shared communication medium during any transmit opportunities for the electronic device, wherein the media access control module is configured to, when operating in a first mode:
monitor a hold signal received from a data transmission control module;
for transmitting a first datagram:
responsive to the hold signal being asserted, prevent the transmission of the first datagram, for communication over the shared communication medium, out of the media access control module; and
responsive to the hold signal being deasserted, immediately transmit the first datagram out of the media access control module.

7. The media access control module of claim 6, wherein the media access control module is configured to, when operating in the first mode:
provide an indication to the data transmission control module of the electronic device when there is a first datagram to be transmitted; and
only transmit the first datagram when the hold signal is deasserted responsive to the provided indication to the data transmission control module.

8. The media access control module of claim 6 or 7, wherein the media access control module is configured to, when operating in the first mode, prevent any transmission of the first datagram out of the media access control module until the hold signal is deasserted.

9. The media access control module of any one of claims 6 to 8, wherein the media access control module is configured to record a time at which the first datagram is transmitted out of the media access control module.

10. A communication arrangement for an electronic device comprising:
the data transmission control module of any one of claims 1 to 5; and
the media access control module of any one of claims 6 to 9.

11. The communication arrangement of claim 10, wherein the data transmission control module and the media access control module are formed from separable chiplets.

12. The communication arrangement of claim 10 or 11, further comprising physical layer circuitry for connection to the shared communication medium, wherein the physical layer circuitry is configured to translate the first datagram into a physical signal for delivery over the shared communication medium.

13. The communication arrangement of claim 12, wherein the physical layer circuitry connects to the data transmission control module via a media-independent interface.

14. The communication arrangement according to claim 10, 11, 12 or 13, further comprising:
a hold signal line connected between the data transmission control module and the media access control module for transmitting a hold signal from the data transmission control module to the media access control module; and
a frame available signal line connected between the media access control module and the data transmission control module for transmitting a hold signal from the media access control module to the data transmission control module.

15. The communication arrangement of claim 14 further comprising:
a collision detected signal line to the media access control module, for receiving a collision detect signal (COL) from physical layer circuitry on detection of a collision on the data link, wherein the media access control module is arranged to back off transmission for a predetermined back off time when it receives the collision detect signal; and
a carrier sense line to the media access control module for receiving a carrier sense signal (CRS) when a signal transmitted by another node on the data link is detected, wherein the media access control module is arranged to wait an interpacket gap (IPG) before transmitting a first datagram after detecting that the carrier sense signal is disasserted.

16. A communication network comprising a plurality of electronic devices, each electronic device comprising the communication arrangement of any one of claims 10 to 15 and being communicatively connected by the shared communication medium.

17. The communication network of claim 16, wherein the shared communication medium is an ethernet cable.

18. A method of communication of an electronic device of a communication network, wherein the electronic device is configured to only transmit data to one or more other electronic devices of the communication network over a shared communication medium during any transmit opportunities for the electronic device, comprising:
continually asserting a hold signal to the media access control module, at least when there is an indication from a media access control module of the electronic device that there is a first datagram to be transmitted, outside every transmit opportunity for the electronic device, to prevent the media access control module from transmitting the first datagram, for communication over the shared communication medium, out of the media access control module; and
at each transmit opportunity for the electronic device, deasserting the hold signal to the media access control module of the electronic device to permit the media access control module to transmit the first datagram, for communication over the shared communication medium, out of the media access control module.

19. A method of communication of a media access control module for an electronic device of a communication network, wherein the electronic device is configured to only transmit data to one or more other electronic devices of the communication network over a shared communication medium during any transmit opportunities for the electronic device,
comprising,
when operating in a first mode, monitoring a hold signal received from a data transmission control module;
for transmitting a first datagram:
responsive to the hold signal being asserted, preventing the transmission of the first datagram over the shared communication medium, out of the media access control module; and
immediately transmitting the first datagram out of the media access control module. responsive to the hold signal being deasserted.

20. A method of communication of an electronic device of a communication network, wherein the electronic device a has a media access control module for transmitting a first datagram via a shared communication medium, a data transmission control module and a hold line, configured to carry a hold signal, connected between the media access control module and the data transmission control module, the electronic device being configured to only transmit data to one or more other electronic devices of the communication network over a shared communication medium during any transmit opportunities for the electronic device, the method comprising:
in the data transmission control module, outside of every transmit opportunity for the electronic device, continually asserting the hold signal; and
at each transmit opportunity for the electronic device, deasserting the hold signal, with the data transmission control module; and
in the media access control module, when operating in a first mode:
monitoring a hold signal received from a data transmission control module;
in case of transmitting a first datagram:
responsive to the hold signal being asserted, preventing the transmission of the first datagram over the shared communication medium, out of the media access control module; and
immediately transmitting the first datagram out of the media access control module. responsive to the hold signal being deasserted.

21. A method of ethernet communication using an electronic device having a media access control module, a data transmission control module and a hold line, configured to carry a hold signal, connected between the media access control module and the data transmission control module, and an ethernet transceiver connected to an ethernet link, the method comprising:
asserting the hold signal;
sending or receiving a beacon signal through the ethernet transceiver;
initialising a device counter;
cycling the device counter through a set of values corresponding to devices on the ethernet link; and
when the device counter indicates that the electronic device has a transmit opportunity, deasserting the hold signal to allow the media access control module to transmit a datagram over the ethernet link.

22. A method according to claim 21, further comprising, when the media access control has an ethernet frame comprising datagrams to transmit and the hold signal is deasserted to indicate that the electronic device has a transmit opportunity, transmitting the ethernet frame over the ethernet link.

23. A method according to claim 21 or 22, wherein the electronic device has a unique identity I, the step of initializing the device counter initializes the device counter D to 0, the method comprising incrementing the device counter D once per cycle, comparing the device counter D to the unique identity I and identifying a transmit opportunity when the device counter D equals the unique identity I.

24. A method according to claim 21 or 22, wherein the electronic device has a unique identity I, the step of initializing the device counter initializes the device counter D to I, the method comprising decrementing the device counter by one once per cycle and identifying a transmit opportunity when the device counter D equals zero.

25. A method according to any one of claims 21 to 24, further comprising the data transmission control module continually asserting the hold signal to the media access control module of the electronic device outside of every transmit opportunity for the electronic device.

26. A method according to any one of claims 21 to 25, further comprising the data transmission control module sending a trigger signal to the media access control module of the electronic device to indicate a transmit opportunity for the electronic device.

27. A method according to any of claims 21 to 26, wherein the media access control module:
monitors a hold signal received from a data transmission control module;
responsive to the hold signal being asserted, prevents the transmission of the first datagram, for communication over the shared communication medium, out of the media access control module; and
responsive to the hold signal being deasserted, immediately transmits the first datagram out of the media access control module.

28. An electronic device having a media access control module, a data transmission control module and a hold line, configured to carry a hold signal, connected between the media access control module and the data transmission control module, and an ethernet transceiver for connection to an ethernet link, the electronic device being arranged to:
assert the hold signal;
send or receive a beacon signal through the ethernet transceiver;
initialize a device counter;
cycle the device counter through a set of values corresponding to devices on the ethernet link; and
when the device counter indicates that the electronic device has a transmit opportunity, deassert the hold signal to allow the media access control module to transmit a datagram over the ethernet link.

29. An electronic device according to claim 28 wherein the data transmission control module is further configured to continually assert the hold signal to the media access control module of the electronic device, outside of every transmit opportunity for the electronic device.

30. A network comprising
an electronic device having a media access control module, a data transmission control module and a hold line, configured to carry a hold signal, connected between the media access control module and the data transmission control module, and an ethernet transceiver;
an ethernet link connected to the ethernet transceiver;
a further electronic device connected to the ethernet link;
wherein each of the electronic device and further device is arranged to:
send or receive a beacon signal through the ethernet transceiver;
initialize a device counter;
cycle the device counter through a set of values corresponding to devices on the ethernet link;
transmit an available datagram when the device counter corresponds to the said electronic device or further device; and
otherwise to operate in a receive mode to receive datagrams when the device counter does not correspond to the said electronic device or further device;
wherein in the electronic device is arranged to deassert the hold signal, when the device counter indicates that the electronic device has a transmit opportunity, to allow the media access control module to transmit a datagram over the ethernet link.

31. A network according to claim 30, being a multidrop network with a plurality of said further devices.

32. A network according to claim 30 or 31, wherein the electronic device is further arranged to transmit an ethernet frame over the ethernet link when the media access control has an ethernet frame comprising datagrams to transmit and the hold signal is deasserted to indicate that the electronic device has a transmit opportunity.

33. A network according to claim 30, 31 or 32, wherein the electronic device has a unique identity I and is arranged to:
initialize the device counter D to 0,
increment the device counter D once per cycle,
compare the device counter D to the unique identity I; and
identify a transmit opportunity when the device counter D equals the unique identity I.

34. A network according to claim 30, 31 or 32, wherein the electronic device has a unique identity I and is arranged to:
initialize the device counter D to I,
decrement the device counter D once per cycle,
compare the device counter D to 0; and
identify a transmit opportunity when the device counter D equals 0.

35. A method of operating a network comprising:
an electronic device having a media access control module, a data transmission control module and a hold line, configured to carry a hold signal, connected between the media access control module and the data transmission control module, and an ethernet transceiver;
an ethernet link connected to the ethernet transceiver; and
a further electronic device connected to the ethernet link;
the method comprising:
initializing a device counter;
cycling the device counter through a set of values corresponding to devices on the ethernet link;
deasserting the hold signal, when the device counter indicates that the electronic device has a transmit opportunity, to allow the media access control module to transmit a datagram over the ethernet link.
transmitting an available datagram when the device counter corresponds to the said electronic device or further device; and
otherwise to operating in a receive mode to receive datagrams when the device counter does not correspond to the said electronic device or further device.

36. A data transmission control module for an electronic device of a communication network, wherein the electronic device is configured to only transmit data to one or more other electronic devices of the communication network over a shared communication medium during any transmit opportunities for the electronic device,
wherein the data transmission control module is configured :
to receive from a media access control module of the electronic device a frame available signal that there is a first datagram to be transmitted:
when a transmit opportunity for the electronic device occurs, and the frame available signal is asserted, to send a signal to the to the media access control module of the electronic device for causing the media access control module to transmit the first datagram,
to receive the first datagram; and
to transmit the datagram onwards towards the shared communication network.

37. A data transmission module according to claim 36, wherein the data transmission control module is further configured, at least when a frame available signal has been received from a media access control module of the electronic device that there is a first datagram to be transmitted:
outside of every transmit opportunity for the electronic device, to continually assert a hold signal to the media access control module to prevent the media access control module from transmitting the first datagram, for communication over the shared communication medium, out of the media access control module; and
at each transmit opportunity for the electronic device, to deassert the hold signal to the media access control module of the electronic device to permit the media access control module to transmit the first datagram, for communication over the shared communication medium, out of the media access control module.

38. A data transmission control module according to claim 36 or 37,
wherein the data transmission module is arranged, when a transmit opportunity for the electronic device occurs and the data transmission control module receives the first datagram,
to transmit the datagram onwards directly without buffering towards the shared communication network.

39. A method of communication of an electronic device of a communication network, wherein the electronic device is configured to only transmit data to one or more other electronic devices of the communication network over a shared communication medium during any transmit opportunities for the electronic device, comprising:
receiving from a media access control module of the electronic device a frame available signal that there is a first datagram to be transmitted:
when a transmit opportunity for the electronic device occurs, and the frame available signal is asserted, sending a signal to the to the media access control module of the electronic device to cause the media access control module to transmit the first datagram, for communication over the shared communication medium, out of the media access control module,
receiving the first datagram and
transmitting the datagram onwards towards the shared communication network:

40. A method according to claim 39, further comprising
continually asserting a hold signal to the media access control module, at least when there is an indication from a media access control module of the electronic device that there is a first datagram to be transmitted, outside every transmit opportunity for the electronic device, to prevent the media access control module from transmitting the first datagram, for communication over the shared communication medium, out of the media access control module; and
at each transmit opportunity for the electronic device, deasserting the hold signal to the media access control module of the electronic device to permit the media access control module to transmit the first datagram, for communication over the shared communication medium, out of the media access control module.

41. A media access control module for an electronic device of a communication network, wherein the electronic device is configured to only transmit data to one or more other electronic devices of the communication network over a shared communication medium during any transmit opportunities for the electronic device, wherein the media access control module is configured, when operating in a first mode:
to transmit a frame available signal when the media access control signal has a frame available for transmission, the frame including a first datagram:
to monitor a signal received from a data transmission control module;
responsive to the monitored signal, to prevent the transmission of the first datagram, for communication over the shared communication medium, out of the media access control module until the signal indicates that the data transmission control module is ready to transmit and then to transmit the first datagram out of the media access control module.

42. A communication arrangement for an electronic device comprising:
a data transmission control module;
a media access control module;
a hold signal line connected between the data transmission control module and the media access control module for transmitting a hold signal from the data transmission control module to the media access control module; and
a frame available signal line connected between the media access control module and the data transmission control module for transmitting a hold signal from the media access control module to the data transmission control module; wherein the data transmission control module is configured:
to receive from a media access control module of the electronic device a frame available signal that there is a first datagram to be transmitted along the frame available signal line;
to continually assert a hold signal to the media access control module along the hold signal line, outside every transmit opportunity for the electronic device, to prevent the media access control module from transmitting the first datagram,
when a transmit opportunity for the electronic device occurs, and the frame available signal is asserted, to disassert the hold signal to the media access control module of the electronic device to cause the media access control module to transmit the first datagram, for communication over the shared communication medium, out of the media access control module,
to receive the first datagram and
to transmit the datagram onwards towards the shared communication network.

43. A communication arrangement for an electronic device according to claim 42
further comprising physical layer circuitry for driving a data link, wherein the data transmission control module is provided between the physical layer circuitry and the media access control module;
a collision detected signal line from the physical layer circuitry to the media access control module, wherein the physical layer circuitry is arranged to send a collision detect signal (COL) when it detects a collision on the data link, and the media access control module is arranged to back off transmission for a predetermined back off time when it receives the collision detect signal; and
a carrier sense line from the physical layer circuitry to the media access control module, wherein the physical layer is arranged to transmit a carrier sense signal (CRS) when it detects a signal from another node on the data link, and wherein the media access control module is arranged to wait an interpacket gap (IPG) before transmitting a first datagram after detecting that the carrier sense signal is disasserted.

44. A data transmission control module for an electronic device of a communication network, wherein the electronic device is configured to only transmit data to one or more other electronic devices of the communication network over a shared communication medium during any transmit opportunities for the electronic device,
wherein the data transmission control module does not have a buffer, being arranged to pass data received from the media access control directly out for transmission over the shared communication medium, and is configured:
when a transmit opportunity for the electronic device occurs, to send a signal to the to the media access control module of the electronic device to cause the media access control module to transmit the first datagram, for communication over the shared communication medium, out of the media access control module,
to receive a first datagram; and
to transmit the datagram onwards on the next clock cycle towards the shared communication network.

45. A data transmission control module according to claim 44, wherein the data transmission control module is configured to receive from the media access control module of the electronic device a frame available signal that there is a first datagram to be transmitted: and
when a transmit opportunity for the electronic device occurs, but only when the frame available signal is asserted, to send the said signal to the to the media access control module of the electronic device for causing the media access control module to transmit the first datagram.

46. A data transmission module according to claim 45, wherein the data transmission control module is further configured, after receiving the frame available signal outside of every transmit opportunity for the electronic device, to continually assert a hold signal to the media access control module to prevent the media access control module from transmitting the first datagram, for communication over the shared communication medium, out of the media access control module; and
at each transmit opportunity for the electronic device, to deassert the hold signal to the media access control module of the electronic device to permit the media access control module to transmit the first datagram, for communication over the shared communication medium, out of the media access control module.
